# EUROPEAN PATENT APPLICATION

(11) **EP 4 207 619 A1**
(43) Date of publication of application: **05.07.2023**
(21) Application number: 21871466.5
(22) Date of filing: 18.09.2021
(51) Int. Cl.: H04B 7/0413

(54) **CYCLIC SHIFT DELAY (CSD) DETERMINING METHOD AND COMMUNICATION APPARATUS**

(30) Priority: 22.09.2020 CN 202011004104
(71) Applicant: Huawei Technologies Co., Ltd., Shenzhen, Guangdong 518129 (CN)
(72) Inventor: LIANG, Dandan, Shenzhen, Guangdong 518129 (CN); XIA, Kaifeng, Shenzhen, Guangdong 518129 (CN); GONG, Bo, Shenzhen, Guangdong 518129 (CN); GAN, Ming, Shenzhen, Guangdong 518129 (CN); HU, Mengshi, Shenzhen, Guangdong 518129 (CN)
(74) Representative: Thun, Clemens
(86) International application number: PCT/CN2021/119467
(87) International publication number: WO 2022/063096

(57) **Abstract**

This application discloses a method for determining a cyclic shift delay CSD value and a communication apparatus. The method includes: A first device generates an information frame based on an antenna quantity and/or a data stream quantity of the first device and an antenna quantity and/or a data stream quantity of a second device, where the information frame is used to indicate a CSD of each antenna and/or a CSD of each data stream of the second device; and the first device sends the information frame to the second device. The CSD of each antenna and/or the CSD of each data stream of the second device are/is indicated by the first device. This helps avoid unintentional beamforming formed by overlapping beams of antennas/data streams of each device. This application may be applied to a plurality of Wi-Fi systems supporting an 802.11 standard, for example, an 802.11be standard.

## Description

This application claims priority to Chinese Patent Application No. 202011004104.1, filed with China National Intellectual Property Administration on September 22, 2020 and entitled "METHOD FOR DETERMINING CYCLIC SHIFT DELAY CSD VALUE AND COMMUNICATION APPARATUS", which is incorporated herein by reference in its entirety.

### TECHNICAL FIELD

This application relates to the field of communication technologies, and in particular, to a method for determining a cyclic shift delay CSD value and a communication apparatus.

### BACKGROUND

A spatial multiplexing multiple-input multiple-output (multiple input and multiple output, MIMO) technology is used for wireless communication transmission, so that a base station formed by a large quantity of antennas can simultaneously communicate with a plurality of spatially separated wireless devices on a same frequency resource and perform multipath propagation. This improves efficiency of sending and receiving data by the base station.

The 802.11ax wireless local area network (WLAN) communication standard defines a cyclic shift delay (Cyclic Shift Delay, CSD) of each antenna and/or a CSD of each data stream in uplink (Uplink, UL), downlink (Downlink, DL), single-user (single user, SU), and multi-user (Multi user, MU) transmission. The CSD of each antenna is a CSD value corresponding to each antenna of a device, and the CSD of each data stream is a CSD value corresponding to each data stream of the device. In a MIMO system, the device simultaneously transmits a plurality of parallel data streams on a same frequency domain resource, and each data stream is referred to as a spatial layer or a space-time stream.

Beam overlapping may be caused when data is sent to another device over different channels respectively corresponding to a plurality of antennas and/or data streams of a device. Using a CSD of each antenna and/or a CSD of each data stream may avoid unintentional beamforming formed by overlapping of a plurality of beams. For example, when an access point (access point, AP) 1 sends data to a station (station, STA) through channels corresponding to an antenna 1 and an antenna 2, unintentional beamforming is formed after beams of the antenna 1 and the antenna 2 overlap. By making a CSD corresponding to the antenna 1 different from a CSD corresponding to the antenna 2, overlapping of the beams of the antenna 1 and the antenna 2 may be avoided, to prevent the unintentional beamforming.

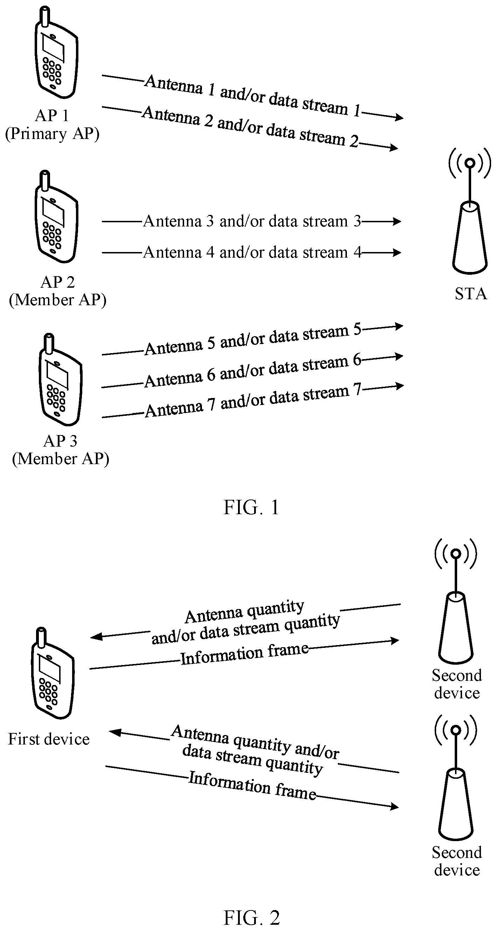

However, when a plurality of devices cooperate, a CSD of each antenna and/or a CSD of each data stream are/is determined by each device. This cannot avoid unintentional beamforming formed by overlapping of beams of antennas of the devices. As shown in FIG. 1, an AP 1, an AP 2, and an AP 3 are a plurality of devices in a multi-device cooperation system. The AP 1 sends data to a STA through channels corresponding to an antenna 1 and an antenna 2, the AP 2 sends data to the STA through channels corresponding to an antenna 3 and an antenna 4, and the AP 3 sends data to the STA through channels corresponding to an antenna 5, an antenna 6, and an antenna 7. In the conventional technology, a CSD of each antenna is separately determined by the AP 1, the AP 2, and the AP 3, which cannot avoid unintentional beamforming formed by overlapping of beams of the antenna 1, the antenna 2, the antenna 3, the antenna 4, the antenna 5, the antenna 6, and the antenna 7.

### SUMMARY

Embodiments of this application provide a method for determining a cyclic shift delay CSD value and a communication apparatus, to help avoid unintentional beamforming formed by beam overlapping in a multi-device cooperation system.

According to a first aspect, this application provides a method for determining a cyclic shift delay CSD value. The method includes: A first device generates an information frame based on an antenna quantity and/or a data stream quantity of the first device and an antenna quantity and/or a data stream quantity of a second device, where the information frame is used to indicate a CSD of each antenna and/or a CSD of each data stream of the second device; and the first device sends the information frame to the second device.

Based on the method described in the first aspect, the first device may indicate the CSD of each antenna and/or the CSD of each data stream of the second device based on antenna quantities and/or data stream quantities of a plurality of devices. This helps ensure that CSDs of antennas of the first device are different, CSDs of antennas of the second device are different, and a CSD of any antenna of the first device is different from a CSD of any antenna of the second device. This helps avoid unintentional beamforming formed by overlapping beams of antennas/data streams of the devices.

In a possible implementation, the first device may further determine a CSD of each antenna and/or a CSD of each data stream of the first device based on the antenna quantity and/or the data stream quantity of the first device and the antenna quantity and/or the data stream quantity of the second device, where CSDs of antennas of the first device are different, CSDs of antennas of the second device are different, and a CSD of any antenna of the first device is different from a CSD of any antenna of the second device; or CSDs of data streams of the first device are different, CSDs of data streams of the second device are different, and a CSD of any data stream of the first device is different from a CSD of any data stream of the second device. By making the CSD of each antenna and/or the CSD of each data stream different in a multi-device cooperation system, unintentional beamforming formed by overlapping beams of antennas/data streams of the devices can be avoided.

In a possible implementation, two specific implementations in which the information frame indicates the CSD may be the following manner 1 and manner 2:
1. The information frame includes a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity. In other words, the first device may indicate the antenna sequence number and/or the data stream sequence number of the second device by using the information frame, and implicitly indicate the CSD of each antenna and/or the CSD of each data stream of the second device, so that the CSD of each antenna and/or the CSD of each data stream of the second device can be accurately indicated.

Optionally, the antenna sequence number of the second device is a start antenna sequence number of the second device based on the first antenna quantity, and the data stream sequence number of the second device is a start data stream sequence number of the second device based on the first data stream quantity. Based on this optional manner, the information frame does not need to carry a sequence number of each antenna and/or a sequence number of each data stream of the second device. This helps reduce signaling overheads.

Optionally, an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device. The first target device is the first device or the second device, and the second target device is the first device or the second device. In other words, in this optional manner, a sequence number of an antenna and/or a sequence number of a data stream corresponding to a device with a smaller quantity of antennas and/or a smaller quantity of data streams are/is higher In this way, antenna CSDs and/or data stream CSDs of more devices can be accurately indicated, and a quantity of devices to which antenna CSDs and/or data stream CSDs need to be randomly allocated is reduced.

Optionally, the information frame includes a user information field, the second device is in a one-to-one correspondence with the user information field, and the antenna sequence number and/or the data stream sequence number of the second device are/is included in the user information field corresponding to the second device. Based on this optional manner, the second device can accurately obtain a corresponding antenna sequence number and/or a corresponding data stream sequence number

Optionally, the information frame includes a common information field, and the first antenna quantity and/or the first data stream quantity are/is included in the common information field. Based on this optional manner, the first antenna quantity and/or the first data stream quantity do/does not need to be carried in the user information field corresponding to each second device. This helps reduce signaling overheads.

2. The first device determines the CSD of each antenna of the second device from CSDs of antennas corresponding to a first antenna quantity, where the first antenna quantity is a sum of the antenna quantity of the first device and the antenna quantity of the second device; and/or the first device determines the CSD of each data stream of the second device from CSDs of data streams corresponding to a first data stream quantity, where the first data stream quantity is a sum of the data stream quantity of the first device and the data stream quantity of the second device; and the first device generates the information frame based on the CSD of each antenna and/or the CSD of each data stream of the second device, where the information frame includes the CSD of each antenna and/or the CSD of each data stream of the second device. In other words, the first device may indicate the CSD of each antenna of the second device and/or the CSD of each data stream by using the information frame, and explicitly indicate the CSD of each antenna and/or the CSD of each data stream of the second device by using the information frame, and the second device does not need to separately determine the CSD of each corresponding antenna and/or the CSD of each corresponding data stream, so that the CSD of each antenna and/or the CSD of each data stream of the second device can be accurately indicated.

Optionally, the information frame includes a user information field, the second device is in a one-to-one correspondence with the user information field, and the CSD of each antenna and/or the CSD of each data stream of the second device are/is included in the user information field corresponding to the second device. This helps the second device accurately obtain information about the second device.

According to a second aspect, this application provides a method for determining a cyclic shift delay CSD value. The method includes: A second device receives an information frame sent by a first device, where the information frame is used to indicate a CSD of each antenna and/or a CSD of each data stream of the second device; and the second device determines the CSD of each antenna and/or the CSD of each data stream of the second device based on the information frame.

In a possible implementation, CSDs of antennas of the first device are different, CSDs of antennas of the second device are different, and a CSD of any antenna of the first device is different from a CSD of any antenna of the second device; and CSDs of data streams of the first device are different, CSDs of data streams of the second device are different, and a CSD of any data stream of the first device is different from a CSD of any data stream of the second device.
1. The information frame includes a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

Optionally, the antenna sequence number of the second device is a start antenna sequence number of the second device based on the first antenna quantity, and the data stream sequence number of the second device is a start data stream sequence number of the second device based on the first data stream quantity.

Optionally, an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device. The first target device is the first device or the second device, and the second target device is the first device or the second device.

Optionally, the information frame includes a user information field, the second device is in a one-to-one correspondence with the user information field, and the antenna sequence number and/or the data stream sequence number of the second device are/is included in the user information field corresponding to the second device.

Optionally, the information frame includes a common information field, and the first antenna quantity and/or the first data stream quantity are/is included in the common information field.

2. The information frame includes the CSD of each antenna and/or the CSD of each data stream of the second device, the information frame includes a user information field, the second device is in a one-to-one correspondence with the user information field, and the CSD of each antenna and/or the CSD of each data stream of the second device are/is included in the user information field corresponding to the second device.

For beneficial effects of the second aspect, refer to beneficial effects of the first aspect.

According to a third aspect, this application provides a method for determining a cyclic shift delay CSD value. The method includes: A first device generates an information frame, where the information frame includes a CSD adjustment value of each antenna and/or a CSD adjustment value of each data stream corresponding to the second device; and the first device sends the information frame to the second device.

Based on the method described in the third aspect, the first device may generate the information frame including the CSD adjustment value of each antenna and/or the CSD adjustment value of each data stream corresponding to the second device, so that the second device adjusts a CSD of each antenna and/or the CSD of each data stream of the second device based on the CSD adjustment value of each corresponding antenna. This helps ensure that a CSD of each antenna of the first device and the CSD of each antenna of second devices are different, and/or a CSD of each data stream of the first device and the CSD of each data stream of the second devices are different. This helps avoid unintentional beamforming formed by overlapping beams of antennas/data streams of devices.

Optionally, the CSD adjustment value of each antenna is used to adjust the CSD of each antenna of the second device, so that CSDs of antennas of the first device are different, CSDs of antennas of the second device are different, and a CSD of any antenna of the first device is different from a CSD of any antenna of the second device; and/or, the CSD adjustment value of each data stream is used to adjust the CSD of each data stream of the second device, so that CSDs of data streams of the first device are different, CSDs of data streams of the second device are different, and a CSD of any data stream of the first device is different from a CSD of any data stream of the second device. This helps avoid unintentional beamforming formed by overlapping beams of antennas/data streams of devices.

Optionally, the first device determines a CSD of each antenna of the second device based on the antenna quantity of the second device, and determines, based on the CSD of each antenna of the first device and the CSD of each antenna of the second device, the CSD adjustment value of each antenna corresponding to the second device; and/or the first device determines a CSD of each data stream of the second device based on the data stream quantity of the second device, and determines, based on the CSD of each data stream of the first device and the CSD of each data stream of the second device, the CSD adjustment value of each data stream corresponding to the second device. Based on the optional method, the CSD adjustment value of each antenna and/or the CSD adjustment value of each data stream of the second device can be accurately determined.

Optionally, the information frame includes a common information field, and the CSD adjustment value of each antenna and/or the CSD adjustment value of each data stream corresponding to the second device are/is included in the common information field. Based on this optional manner, the CSD adjustment value of each antenna and/or the CSD adjustment value of each data stream of the second device do/does not need to be carried in a plurality of fields corresponding to each second device. This helps reduce signaling overheads. Alternatively, the information frame includes a user information field, the second device is in a one-to-one correspondence with the user information field, and the CSD adjustment value of each antenna and/or the CSD adjustment value of each data stream corresponding to the second device are/is included in the user information field corresponding to the second device. This helps the second device accurately indicate the CSD adjustment value of each antenna and/or the CSD adjustment value of each data stream of the second device.

According to a fourth aspect, this application provides a method for determining a cyclic shift delay CSD value. The method includes: A second device receives an information frame sent by a first device, where the information frame includes a CSD adjustment value of each antenna and/or a CSD adjustment value of each data stream corresponding to the second device; and the second device adjusts a CSD of each antenna based on the CSD adjustment value of each antenna corresponding to the second device.

In a possible implementation, the second device adjusts the CSD of each antenna of the second device based on the CSD adjustment value of each antenna corresponding to the second device, so that CSDs of antennas of the first device are different, CSDs of antennas of the second device are different, and a CSD of any antenna of the first device is different from a CSD of any antenna of the second device; and/or the second device adjusts the CSD of each data stream of the second device based on the CSD adjustment value of each data stream corresponding to the second device, so that CSDs of data streams of the first device are different, CSDs of data streams of the second device are different, and a CSD of any data stream of the first device is different from a CSD of any data stream of the second device.

In a possible implementation, the information frame includes a common information field, and the CSD adjustment value of each antenna and/or the CSD adjustment value of each data stream corresponding to the second device are/is included in the common information field; and/or the information frame includes a user information field, the second device is in a one-to-one correspondence with the user information field, and the CSD adjustment value of each antenna and/or a CSD adjustment value of each data stream corresponding to the second device are/is included in the user information field corresponding to the second device.

In a possible implementation, the second device performs cyclic shift calculation on the CSD of each antenna of the second device based on the CSD adjustment value of each antenna corresponding to the second device, to obtain the adjusted CSD of each antenna of the second device; and the second device performs the cyclic shift calculation on the CSD of each data stream of the second device based on the CSD adjustment value of each data stream corresponding to the second device, to obtain the adjusted CSD of each data stream of the second device.

For beneficial effects of the fourth aspect, refer to beneficial effects of the third aspect.

According to a fifth aspect, a communication apparatus is provided. The communication apparatus has some or all functions of implementing the first device or the second device according to the first aspect or the third aspect. For example, a function of the apparatus may include functions in some or all embodiments of the terminal device in this application, or may include a function of separately implementing any one of the embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and the communication unit, and the storage unit stores program instructions and data that are necessary for the communication apparatus.

In an implementation, the communication apparatus includes:
a processing unit, configured generate, by using a first device, an information frame based on an antenna quantity and/or a data stream quantity of the first device and an antenna quantity and/or a data stream quantity of a second device, where the information frame is used to indicate a CSD of each antenna and/or a CSD of each data stream of the second device; and
a communication unit, configured to send, by using the first device, an information frame to the second device.

For related content of this implementation, refer to the related content of the first aspect. Details are not described herein again.

In an implementation, the communication apparatus includes:
a processor, configured generate, by using a first device, an information frame based on an antenna quantity and/or a data stream quantity of the first device and an antenna quantity and/or a data stream quantity of a second device, where the information frame is used to indicate a CSD of each antenna and/or a CSD of each data stream of the second device; and
a transceiver, configured to send, by using the first device, the information frame to the second device.

For related content of this implementation, refer to the related content of the first aspect. Details are not described herein again.

In still another implementation, the communication apparatus may include:
a processing unit, configured to generate, by using a first device, an information frame, where the information frame includes a CSD adjustment value of each antenna and/or a CSD adjustment value of each data stream corresponding to a second device; and
a communication unit, configured to send, by using the first device, the information frame to the second device.

For related content of this implementation, refer to the related content of the third aspect. Details are not described herein again.

In still another implementation, the communication apparatus may include:
a processor, configured to generate, by using a first device, an information frame, where the information frame includes a CSD adjustment value of each antenna and/or a CSD adjustment value of each data stream corresponding to a second device; and
a transceiver, configured to send, by using the first device, the information frame to the second device.

For related content of this implementation, refer to the related content of the third aspect. Details are not described herein again.

In an implementation process, the processor may be configured to perform, for example, but not limited to, baseband related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (including but not limited to a graphics processing unit, a multimedia processor, and the like) may be integrated onto a same chip. Such a chip may be referred to as a system on chip (System on Chip). Whether the components are separately disposed on different chips or integrated and disposed on one or more chips usually depends on a requirement of a product design. Implementation forms of the foregoing components are not limited in this embodiment of this application.

According to a sixth aspect, a communication apparatus is provided. The communication apparatus has some or all functions of implementing the first device or the second device according to the second aspect or the fourth aspect. For example, a function of the apparatus may include functions in some or all embodiments of the terminal device in this application, or may include a function of separately implementing any one of the embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and the communication unit, and the storage unit stores program instructions and data that are necessary for the communication apparatus.

In an implementation, the communication apparatus includes:
a communication unit, configured to receive, by using a second device, an information frame sent by a first device, where the information frame is used to indicate a CSD of each antenna and/or a CSD of each data stream of the second device; and
a processing unit, configured to determine, by using the second device, the CSD of each antenna and/or the CSD of each data stream of the second device based on the information frame.

For related content of this implementation, refer to the related content of the second aspect. Details are not described herein again.

In an implementation, the communication apparatus includes:
a processor, configured to receive, by using a second device, an information frame sent by a first device, where the information frame is used to indicate a CSD of each antenna and/or a CSD of each data stream of the second device; and
a transceiver, configured to determine, by using the second device, the CSD of each antenna and/or the CSD of each data stream based on the information frame of the second device.

For related content of this implementation, refer to the related content of the second aspect. Details are not described herein again.

In still another implementation, the communication apparatus may include:
a communication unit, configured to receive, by using a second device, an information frame sent by a first device, where the information frame includes a CSD adjustment value of each antenna and/or a CSD adjustment value of each data stream corresponding to the second device; and
a processing unit, configured to adjust, by using the second device based on the CSD adjustment value of each antenna corresponding to the second device, a CSD of each antenna of the second device.

For related content of this implementation, refer to the related content of the fourth aspect. Details are not described herein again.

In still another implementation, the communication apparatus may include:
a transceiver, configured to receive, by using a second device, an information frame sent by a first device, where the information frame includes a CSD adjustment value of each antenna and/or a CSD adjustment value of each data stream corresponding to the second device; and
a processor, configured to adjust, by using the second device based on the CSD adjustment value of each antenna corresponding to the second device, a CSD of each antenna of the second device.

For related content of this implementation, refer to the related content of the fourth aspect. Details are not described herein again.

In an implementation process, the processor may be configured to perform, for example, but not limited to, baseband related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (including but not limited to a graphics processing unit, a multimedia processor, and the like) may be integrated onto a same chip. Such a chip may be referred to as a system on chip (System on Chip). Whether the components are separately disposed on different chips or integrated and disposed on one or more chips usually depends on a requirement of a product design. Implementation forms of the foregoing components are not limited in this embodiment of this application.

According to a seventh aspect, this application provides a communication apparatus, where the communication apparatus includes a processor, and when the processor invokes a computer program in a memory, the method according to the first aspect or the third aspect is performed.

According to an eighth aspect, this application provides a communication apparatus. The communication apparatus includes a processor and a memory. The memory is configured to store computer-executable instructions. The processor is configured to execute the computer-executable instructions stored in the memory, so that the communication apparatus performs the method in the first aspect or the third aspect. Optionally, the memory may be inside the processor, or may be outside the processor.

According to a ninth aspect, this application provides a communication apparatus. The communication apparatus includes a processor, a memory, and a transceiver. The transceiver is configured to receive a channel or a signal, or send a channel or a signal. The memory is configured to store program code. The processor is configured to invoke the program code from the memory to perform the method in the first aspect or the third aspect.

According to a tenth aspect, this application provides a communication apparatus. The communication apparatus includes a processor and an interface circuit. The interface circuit is configured to receive code instructions and transmit the code instructions to the processor. The processor runs the code instructions to perform the method according to the first aspect or the third aspect.

According to an eleventh aspect, this application provides a communication apparatus, where the communication apparatus includes a processor, and when the processor invokes a computer program in a memory, the method according to the second aspect or the fourth aspect is performed.

According to a twelfth aspect, this application provides a communication apparatus. The communication apparatus includes a processor and a memory. The memory is configured to store computer-executable instructions. The processor is configured to execute the computer-executable instructions stored in the memory, so that the communication apparatus performs the method in the second aspect or the fourth aspect. Optionally, the memory may be inside the processor, or may be outside the processor.

According to a thirteenth aspect, this application provides a communication apparatus. The communication apparatus includes a processor, a memory, and a transceiver. The transceiver is configured to receive a channel or a signal, or send a channel or a signal. The memory is configured to store program code. The processor is configured to invoke the program code from the memory to perform the method in the second aspect or the fourth aspect.

According to a fourteenth aspect, this application provides a communication apparatus. The communication apparatus includes a processor and an interface circuit. The interface circuit is configured to receive code instructions and transmit the code instructions to the processor. The processor runs the code instructions to perform the method according to the second aspect or the fourth aspect.

According to a fifteenth aspect, this application provides a computer-readable storage medium, where the computer-readable storage medium is configured to store instructions, and when the instructions are executed, the method in the first aspect or the third aspect is implemented.

According to a sixteenth aspect, this application provides a computer-readable storage medium, where the computer-readable storage medium is configured to store instructions, and when the instructions are executed, the method in the second aspect or the fourth aspect is implemented.

According to a seventeenth aspect, this application provides a computer program product including instructions. When the instructions are executed, the method in the first aspect or the third aspect is implemented.

According to an eighteenth aspect, this application provides a computer program product including instructions. When the instructions are executed, the method in the second aspect or the fourth aspect is implemented.

### BRIEF DESCRIPTION OF DRAWINGS

FIG. 1 is a schematic diagram of an existing multi-AP cooperation system;
FIG. 2 is a schematic diagram of a system architecture according to an embodiment of this application;
FIG. 3 is a schematic diagram of structures of an AP and a STA according to an embodiment of this application;
FIG. 4 is a schematic diagram of structures of another AP and another STA according to an embodiment of this application;
FIG. 5 is a schematic flowchart of a method for determining a cyclic shift delay CSD value according to an embodiment of this application;
FIG. 6 is a schematic diagram of a frame structure of an information frame according to an embodiment of this application;
FIG. 7a is a schematic diagram of a frame structure of another information frame according to an embodiment of this application;
FIG. 7b is a schematic diagram of a frame structure of still another information frame according to an embodiment of this application;
FIG. 7c is a schematic diagram of a frame structure of still another information frame according to an embodiment of this application;
FIG. 8a is a schematic diagram of a frame structure of still another information frame according to an embodiment of this application;
FIG. 8b is a schematic diagram of a frame structure of still another information frame according to an embodiment of this application;
FIG. 8c is a schematic diagram of a frame structure of still another information frame according to an embodiment of this application;
FIG. 9a is a schematic flowchart of another method for determining a cyclic shift delay CSD value according to an embodiment of this application;
FIG. 9b is a schematic diagram of a frame structure of an information frame according to an embodiment of this application;
FIG. 9c is a schematic diagram of a frame structure of an information frame according to an embodiment of this application;
FIG. 9d is a schematic diagram of a frame structure of an information frame according to an embodiment of this application;
FIG. 9e is a schematic diagram of a frame structure of an information frame according to an embodiment of this application;
FIG. 10 is a schematic diagram of a structure of a communication apparatus according to an embodiment of this application;
FIG. 11 is a schematic diagram of a structure of another communication apparatus according to an embodiment of this application; and
FIG. 12 is a schematic diagram of a structure of still another communication apparatus according to an embodiment of this application.

### DESCRIPTION OF EMBODIMENTS

In the specification, the claims, and the accompanying drawings of this application, the terms "first", "second", and the like are intended to distinguish between different objects but do not indicate a particular order. In addition, terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of means two or more, "at least two (items)" means two, three, or more, and " and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

To better understand embodiments of this application, the following describes terms in embodiments of this application.

### 1. Cyclic shift delay (cyclic shift delay, CSD) value of an antenna

When wireless communication transmission is performed by using a spatial multiplexing multiple-input multiple-output (multiple input and multiple output, MIMO) technology, when a device separately transmits data streams at the same time by using a plurality of antennas, a plurality of signals corresponding to the data streams arrive at a receiving device through different paths. A spatial orientation change of the data streams affects a channel condition of a field, and the change of the channel condition between fields during transmission may be referred to as a beam change. When the beam change is beam overlapping, that is, when spatial orientations of the data streams overlap, unintentional beamforming is caused.

To avoid beam overlapping and unintentional beamforming caused when the device sends signals at the same time by using the plurality of antennas, the device allocates a CSD (a CSD of an antenna may also be referred to as an antenna CSD) to each antenna for sending a signal. The antennas used by the device to send signals are a part or all of antennas of the device.

Referring to Table 1, Table 1 is a cyclic shift value table of a legacy short training field (Legacy mode short training field, L-STF), a legacy long training field (Legacy mode long training field, L-LTF), a legacy signal field (Legacy mode signal field, L-SIG), and a very high throughput signal A (Very high throughput signal A, VHT-SIG-A) field of a presentation protocol data unit (Presentation Protocol Data Unit, PPDU). A total quantity of transmit chains *i_{TX}* (which may also be understood as a total quantity of transmit antennas) is *N_{TX} ,* and CSDs of the antenna may be defined by values listed in Table 1. In Table 1, each row represents a CSD of each antenna in a total quantity of transmit antennas, and each column represents a CSD of an antenna. A measurement unit of a CSD is ns (nanosecond), and CSDs of antennas in a same row are different (that is, CSDs of antennas of a same device are different).

For example, in FIG. 1, a quantity of transmit antennas of an AP 1 is 2, and two antennas for sending signals are respectively an antenna 1 and an antenna 2. The AP 1 determines, based on the antenna quantity 2, that a CSD of the antenna 1 and a CSD of the antenna 2 belong to antenna CSDs in a second row of Table 1, and determines, based on a sequence number of each antenna, that the CSD of the antenna 1 is [0] in a first column of the second row, and that the CSD of the antenna 2 is [-200] in a second column of the second row. The CSD of the antenna 1 and the CSD of the antenna 2 may be represented as [0, -200]. The AP 1 uses a 0ns CSD to perform a 0ns cyclic delay on a time *T*_{0,1} at which the antenna 1 sends a signal, and an adjusted time at which the antenna 1 sends the signal is still *T*_{0,1}. The AP 1 uses a -200ns CSD to adjust a time *T*_{0,2} at which the antenna 2 sends a signal, and an adjusted time at which the antenna 2 sends the signal is *T*_{0.2} × (-200).

**Table 1 Cyclic shift value table of the L-STF, L-LTF, L-SIG, and VHT-SIG-A fields of the PPDU**

| Values of the L-STF, the L-LTF, the L-SIG, and the VHT-SIG-A fields of the PPDU | | | | | | | | | |
|---|---|---|---|---|---|---|---|---|---|
| Total quantity of transmission chains per frequency segment *(NTx)* | Cyclic shift of a transmit chain *i_{TX}* (unit: ns) | | | | | | | | |
| | 1 | 2 | 3 | 4 | 5 | 6 | 7 | 8 | >8 |
| 1 | 0 | - | - | - | - | - | - | - | - |
| 2 | 0 | -200 | - | - | - | - | - | - | - |
| 3 | 0 | -100 | -200 | - | - | - | - | - | - |
| 4 | 0 | -50 | -100 | -150 | - | - | - | - | - |
| 5 | 0 | -175 | -25 | -50 | -75 | - | - | - | - |
| 6 | 0 | -200 | -25 | -150 | -175 | -125 | - | - | - |
| 7 | 0 | -200 | -150 | -25 | -175 | -75 | -50 | - | - |
| 8 | 0 | -175 | -150 | -125 | -25 | -100 | -50 | -200 | - |
| >8 | 0 | -175 | -150 | -125 | -25 | -100 | -50 | -200 | Between -200 and 0 (including -200 and 0) |

Table 1 shows only the CSD of each antenna when a quantity of antennas is less than or equal to 8. When the quantity of the antennas used by the device to send signals exceeds 8, the device separately determines antenna CSDs in an eighth row as CSDs of antennas whose antenna sequence numbers are 1 to 8, and randomly allocates an antenna CSD to an antenna whose antenna sequence number is greater than 8. The randomly allocated antenna CSD is less than or equal to 200, is greater than or equal to 0, and is different from CSDs of other antennas in the eighth row.

For example, a quantity of transmit antennas of the AP 1 is 10, and sequence numbers of antennas 1 to 10 are 1 to 10. The AP 1 respectively determines [0, -175, -150, -125, -25, -100, -50, -200] in the eighth row of Table 1 as CSD values of the antenna 1 to the antenna 8. The AP 1 determines that a CSD of an antenna 9 and a CSD of an antenna 10 are less than or equal to 200, are greater than or equal to 0, and are not any value of 0, -175, -150, - 125, -25, -100, -50, or -200. For example, the AP 1 determines that the CSD of the antenna 9 may be [-20], and the CSD of the antenna 10 may be [-75].

### 2. CSD of a data stream

To avoid beam overlapping and unintentional beamforming caused when signals are sent by a device at the same time by using a plurality of data streams (which may also be referred to as spatial streams, spatial layers, space-time streams, or space-time streams), the device allocates a CSD (a CSD of a data stream may also be referred to as a data stream CSD) to each data stream for sending a signal. The data streams used by the device to send signals are a part or all of data streams of the device.

Referring to Table 2, Table 2 is a cyclic shift value table of a VHT (very high throughput) modulated field of a PPDU. A total quantity of data streams n (which may also be understood as a data stream quantity) for sending signals is *N_{STS}* , and CSDs of the data streams may be defined by values listed in Table 2. In Table 2, each row represents a CSD of each data stream in a total quantity of data streams for sending signals, and each column represents a CSD of a data stream. A measurement unit of a CSD is ns (nanosecond), and CSDs of data streams in a same row are different (that is, CSDs of data streams of a same device are different).

For example, a quantity of data streams for sending signals of the AP 1 is 3, and three data streams used for sending signals are respectively a data stream 1, a data stream 2, and a data stream 3. In Table 2, the AP 1 determines, based on the data stream quantity 3, that a CSD of the data stream 1, a CSD of the data stream 2, and a CSD of the data stream 3 all belong to data stream CSDs in a third row of Table 1, and determines, based on a sequence number of each data stream, that the CSD of the data stream 1 is [0] in a first column of the third row, the CSD of the data stream 2 is [-400] in a second column of the third row, and the CSD of the data stream 2 is [-200] in the third column of the third row. In other words, the AP 1 uses a 0ns CSD to perform a 0ns cyclic delay on a time *T*_{0,1} at which the data stream 1 sends a signal, and an adjusted time at which the data stream 1 sends the signal is still *T*_{0,1}. The AP 1 uses a -400ns CSD to adjust a time *T*_{0,1} at which the data stream 2 sends a signal, and an adjusted time at which the data stream 2 sends the signal is *T*_{0,1} × (-400) . The AP 1 uses a -200ns CSD to adjust a time *T*_{0,1} at which the data stream 3 sends a signal, and an adjusted time at which the data stream 3 sends the signal is *T*_{0,1} × (-200) .

**Table 2 Cyclic shift value table of the VHT modulated field of the PPDU**

| *T_{CH,VHT⁽ⁿ⁾}* value of the VHT modulated field of the PPDU | | | | | | | | |
|---|---|---|---|---|---|---|---|---|
| Total quantity of space-time streams (*N_{STS}*, total) | Cyclic shift of a space-time stream n (unit: ns) | | | | | | | |
| | 1 | 2 | 3 | 4 | 5 | 6 | 7 | 8 |
| 1 | 0 | - | - | - | - - | - - | - | - |
| 2 | 0 | -400 | - | - | - | - | - | - |
| 3 | 0 | -400 | -200 | - | - | - | - | - |
| 4 | 0 | -400 | -200 | -600 | - | - | - | - |
| 5 | 0 | -400 | -200 | -600 | -350 | - | - | - |
| 6 | 0 | -400 | -200 | -600 | -350 | -650 | - | - |
| 7 | 0 | -400 | -200 | -600 | -350 | -650 | -100 | - |
| 8 | 0 | -400 | -200 | -600 | -350 | -650 | -100 | -750 |

Table 2 shows only the CSD of each data stream when a quantity of data streams is less than or equal to 8. When the quantity of the data streams used by the device to send signals exceeds 8, the device separately determines data stream CSDs in an eighth row as CSDs of data streams whose data stream sequence numbers are 1 to 8, and randomly allocates a data stream CSD to a data stream whose data stream sequence number is greater than 8. The randomly allocated CSD of the data stream is different from CSDs of other data streams in the eighth row.

For example, a quantity of data streams for sending signals of the AP 1 is 10, and sequence numbers of data streams 1 to 10 are respectively 1 to 10. The AP 1 determines [0, -400, -200, -600, -350, -650, -100, -750] in the eighth row in Table 2 as CSD values of the data stream 1 to the data stream 8. The AP 1 determines that a CSD of a data stream 9 and a CSD of a data stream 10 are any values different from [0, -400, -200, -600, -350, -650, -100, -750]. For example, the CSD of the data stream 9 may be -250, and the CSD of the data stream 10 may be -500.

When a device uses a plurality antennas and/or data streams to send signals at the same time, beam overlapping and unintentional beamforming are caused. Using the method described above to assign a CSD of each antenna and/or a CSD of each data stream to the device, unintentional beamforming caused by overlapping of a plurality of beams can be avoided.

### 3. Multi-device collaboration system

The multi-device cooperation system may be a multi-AP cooperation system or a multi-STA cooperation system.

Taking the multi-AP cooperation system as an example, the multi-AP cooperation system includes a plurality of APs and one or more STAs. The plurality of APs form an access point cluster, and an AP in the access point cluster is selected as a coordinator node of the access point cluster. The AP may be referred to as a C-AP or a primary AP. Remaining APs function as member nodes, and may be referred to as M-APs, member APs, or secondary APs. The plurality of APs coordinate with each other and share information, which is referred to as multi-AP cooperation. As shown in FIG. 1, in a multi-AP cooperation system, an AP 1 is a primary AP, and an AP 2 and an AP 3 are member APs.

Existence of the plurality of APs shortens a transmission distance between an AP and a STA, reduces a path loss in a wireless signal transmission process, and improves signal transmission quality. In the multi-AP cooperation system, allocation of a channel resource may be scheduled by the primary AP in a centralized manner, so that the plurality of APs can fairly share a transmission channel. In this way, transmission efficiency of a media access control (Media Access Control, MAC) layer is improved, and time overheads when the STA contends for accessing a channel are reduced. In addition, in a movement process, the STA may perform any fast handover between different APs, to avoid processes such as disassociation, re-association, and authentication. This helps reduce a delay and power consumption, ensure a quality of service (Quality of Service, QoS) requirement, improve running efficiency of a network, and improve a data throughput of the network. The multi-STA cooperation system is similar, and details are not described herein again.

When a plurality of devices serve as signal sending devices and send signals to a receiving device at the same time by using respective antennas and/or data streams, each sending device determines a CSD of each antenna and/or a CSD of each data stream according to a correspondence between an antenna quantity and CSDs of antennas in Table 1 and/or a correspondence between a data stream quantity and CSDs of data streams in Table 2. When two sending devices have a same antenna quantity and/or a same data stream quantity, a CSD of each antenna and/or a CSD of each data stream determined by the two sending devices are the same. Beams corresponding to antennas with a same CSD and/or data streams with a same CSD overlap and form unintentional beamforming.

As shown in FIG. 1, the AP 1, the AP 2, and the AP 3 in the multi-AP cooperation system are sending devices, and the STA is a receiving device. When a time at which the AP 1 sends signals, a time at which the AP 2 sends signals, a time at which the AP 3 sends signals are all *T*ₒ*,* the AP 1 uses an antenna 1 and an antenna 2 to send the signals to the STA, the AP 2 uses an antenna 3 and an antenna 4 to send the signals to the STA, and the AP 3 uses an antenna 5, an antenna 6, and an antenna 7 to send the signals to the STA. The AP 1, the AP 2, and the AP 3 separately determine a CSD of each antenna according to Table 1, and obtain that a CSD of the antenna 1 in the AP 1 is [0], a CSD of the antenna 2 in the AP 1 is [-200], a CSD of the antenna 3 in the AP 2 is [0], a CSD of the antenna 4 in the AP 2 is [-200], a CSD of the antenna 5 in the AP 3 is [0], a CSD of the antenna 6 in the AP 3 is [-100], and a CSD of the antenna 7 in the AP 3 is [-200]. Antenna CSDs of the antenna 1, the antenna 3, and the antenna 5 are the same, and channels corresponding to the antenna 1, the antenna 3, and the antenna 5 cause unintentional beamforming formed by overlapping beams. Antenna CSDs of the antenna 2, the antenna 4, and the antenna 7 are the same, and channels corresponding to the antenna 2, the antenna 4, and the antenna 7 cause unintentional beamforming formed by overlapping beams.

To avoid unintentional beamforming caused by overlapping of a plurality of beams during multi-device cooperation, the embodiments of this application provide a CSD determining method and a communication apparatus.

The method provided in the embodiments of this application is applied to a wireless communication system. The wireless communication system may be a wireless local area network (Wireless local area network, WLAN) or a cellular network, and the method may be implemented by a communication device in the wireless communication system or a chip or a processor in the communication device. In the wireless local area network, the communication device supports communication using an IEEE 802.11 series protocol, and the IEEE 802.11 series protocol includes: 802.11be, 802.11ax, or 802.11a/b/g/n/ac. The communication device may be an AP or a STA.

To better understand the embodiments of this application, the following first describes a system architecture in the embodiments of this application.

FIG. 2 is a schematic diagram of a system architecture according to an embodiment of this application. The system architecture includes a first device and at least one second device. In FIG. 2, an example in which the system architecture includes two second devices is used. Certainly, the system architecture may include only one second device, or include two or more second devices.

Both the first device and the second device may be access points (access point, AP) or non-access point stations (none access point station, non-AP STA). The non-access point stations may be referred to as stations (station, STA) for short. The first device and the second device belong to devices in a same access point cluster in a multi-device cooperation system. When both the first device and the second device are APs, the first device and the second device may be APs in a same multi-AP cooperation system. The first device may be a primary AP, and the second device is a member AP. For example, the first device may be an AP 1 in FIG. 1, and the second devices may be an AP 2 and an AP 3 in FIG. 1. The AP 1, the AP 2, and the AP 3 coordinate with each other and share information. The AP 1 is the primary AP, and the AP 2 and the AP 3 are member APs. When both the first device and the second device are STAs, the first device and the second device may also be STAs in a same multi-STA cooperation system. The first device may be a primary STA, and the second device is a member STA.

In this embodiment of this application, the AP is an apparatus for providing a service for the STA, and may support 802.11 series protocols. For example, the AP may be a communication entity such as a communication server, a router, a switch, or a bridge. Alternatively, the AP may include various forms of macro base stations, micro base stations, relay stations, and the like. Certainly, the AP may alternatively be chips and processing systems in these various forms of devices, to implement the methods and functions in the embodiments of this application. In addition, the AP may support high-rate and low-delay transmission. With continuous evolution of wireless local area network application scenarios, the AP may be further applied to more scenarios, for example, a sensor node (for example, a smart water meter, a smart electricity meter, and a smart air detection node) in a smart city, a smart device (for example, a smart camera, a projector, a display screen, a television, a sound system, a refrigerator, and a washing machine) in a smart home, a node and an entertainment terminal (for example, wearable devices such as an AR and a VR) in an internet of things, a smart device (for example, a printer and a projector) in a smart office, an internet of vehicles device in an internet of vehicles, and an infrastructure (for example, a vending machine, self-service navigation consoles of shopping malls and supermarkets, a self-service cashier, and a self-service dining machine) in daily life scenarios.

The STA has a wireless receiving and sending function, may support the 802.11 series protocols, and may communicate with an AP or another STA. For example, the STA is a device that allows a user to communicate with an AP and further communicate with any user that communicates with a WLAN. For example, the STA may be user equipment that can be connected to a network, such as a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, or may be an internet of things node in an internet of things, or may be a vehicle-mounted communication apparatus in an internet of vehicles. The STA may alternatively be a chip and a processing system in the foregoing terminals. Specific forms of the STA and the AP are not specifically limited in embodiments of this application, and are merely examples for description herein. The 802.11 series protocols may include 802.11be, 802.11 ax, 802.11 a/b/g/n/ac, and the like.

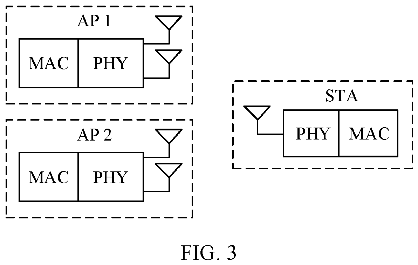

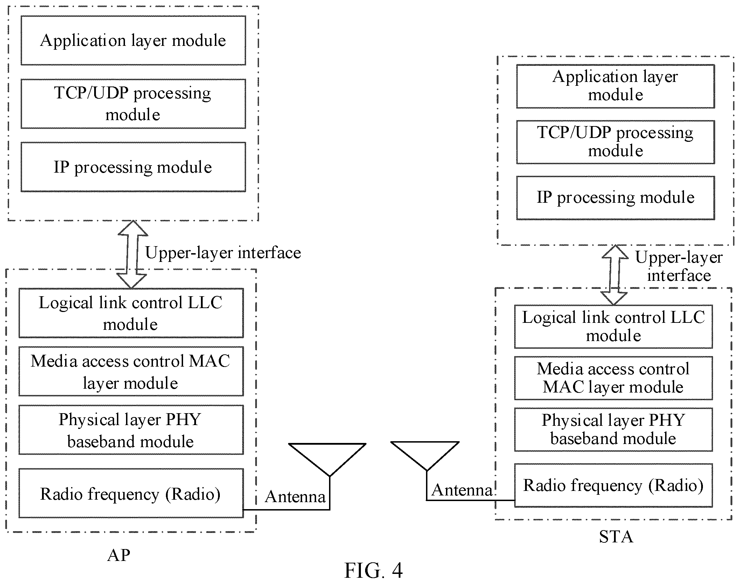

FIG. 3 and FIG. 4 are schematic diagrams of structures of an AP and a STA. An 802.11 standard focuses on an 802.11 physical layer (Physical layer, PHY) and an 802.11 media access control (Media Access Control, MAC) layer of the AP and the STA (such as a mobile phone and a laptop). As shown in FIG. 3, APs are independent of each other at the MAC layer and the PHY layer, and STAs are independent of each other at the MAC layer and the PHY layer. For example, the MAC layer or the PHY layer may be implemented by a processor in a chip system of the AP and/or the STA, or may be implemented by different processing modules in a chip system.

A device in the embodiments of this application may be a single-antenna device, or may be a multi-antenna device, for example, a device with more than two antennas. A quantity of antennas included in the device is not limited in this embodiment of this application. In FIG. 3, an example in which the AP has a plurality of antennas and the STA has a single antenna is used for illustration. In this embodiment of this application, the device may allow services of a same access type to be transmitted on different links, or even allow a same data packet to be transmitted on different links. Alternatively, the device may not allow services of a same access type to be transmitted on different links, but may allow services of different access types to be transmitted on different links.

As shown in FIG. 4, a diagram of an internal structure of the AP includes an application layer module, a transmission control protocol (Transmission Control Protocol, TCP) processing module, a user datagram protocol (User Datagram Protocol, UDP) processing module, an internet protocol address (Internet Protocol Address, IP) processing module, a logical link control (Logical Link Control, LLC) module, a media access control MAC layer module, a physical layer PHY baseband module, and a radio frequency Radio. The application layer module, the TCP/UDP processing module, the IP processing module, the logical link control LLC module, the media access control MAC layer module, the physical layer PHY baseband module, and the radio frequency Radio are independent of each other, and are connected through an upper-layer interface. A structure principle of the STA is the same as that of the AP, and details are not described herein again.

The communication device in the embodiments of this application is an apparatus with a wireless communication function. The apparatus may be a complete device, or may be a chip, a processing system, or the like installed in the complete device. The device installed with the chip or the processing system can implement the methods and the functions in the embodiments of this application under control of the chip or the processing system.

The following further describes in detail a method for determining a cyclic shift delay CSD value and a communication apparatus that are provided in the embodiments of this application.

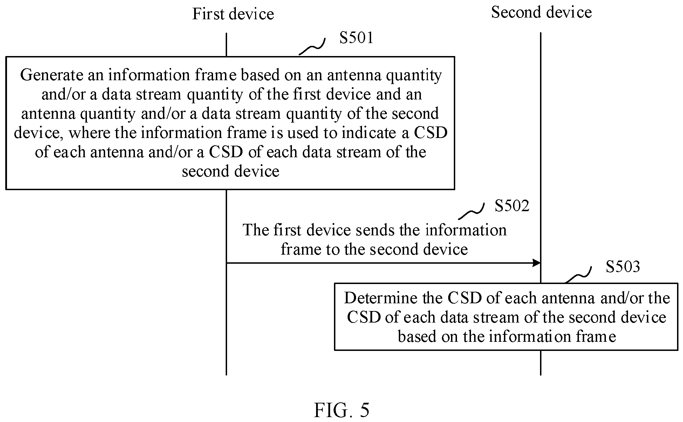

FIG. 5 is a schematic flowchart of a method for determining a cyclic shift delay CSD value according to an embodiment of this application. As shown in FIG. 5, the method for determining a cyclic shift delay CSD value includes the following step 501 to step 503. The method shown in FIG. 5 may be executed by a first device and a second device. Alternatively, the method shown in FIG. 5 may be performed by a chip in the first device and a chip in the second device. Specifically:
501: The first device generates an information frame based on an antenna quantity and/or a data stream quantity of the first device and an antenna quantity and/or a data stream quantity of the second device, where the information frame is used to indicate a CSD of each antenna and/or a CSD of each data stream of the second device.

In this embodiment of this application, for descriptions of the first device and the second device, refer to the descriptions in the foregoing system architecture. Details are not described herein again.

In this embodiment of this application, the first device generates the information frame based on the antenna quantity of the first device and the antenna quantity of the second device, where the information frame is used to indicate the CSD of each antenna of the second device. Alternatively, the first device generates the information frame based on the data stream quantity of the first device and the data stream quantity of the second device, where the information frame is used to indicate the CSD of each data stream of the second device. Alternatively, the first device generates the information frame based on the antenna quantity and the data stream quantity of the first device and the antenna quantity and the data stream quantity of the second device, where the information frame is used to indicate the CSD of each antenna and the CSD of each data stream of the second device. Optionally, the antenna quantity in this embodiment of this application may be specifically a quantity of transmit antennas of a device, or a sum of a quantity of transmit antennas and a quantity of receive antennas of the device. In this embodiment of this application, an example in which the data stream quantity used by the device for sending a signal is all data streams supported by the device is used. The data stream quantity of the device may be understood as the data stream quantity used by the device for sending the signal.

For example, the first device generates the information frame based on the antenna quantity of the first device and the antenna quantity of the second device. It is assumed that the first device is an AP 1, and the second device includes an AP 2 and an AP 3. The AP 1 has two antennas, the AP 2 has two antennas, and the AP 3 has three antennas. The AP 1 generates an information frame based on an antenna quantity (that is, 2) of the AP 1, an antenna quantity (that is, 2) of the AP 2, and an antenna quantity (that is, 3) of the AP 3. The information frame indicates a CSD of each antenna of the AP 2 and a CSD of each antenna of the AP 3. The first device generates the information frame based on the data stream quantity of the first device and the data stream quantity of the second device in a similar way, and details are not described herein again. Similarly, the first device generates the information frame based on the antenna quantity and the data stream quantity of the first device and the antenna quantity and the data stream quantity of the second device. Details are not described herein again.

In a possible implementation, the information frame may be a frame that can carry scheduling information, such as a trigger frame or an NDPA frame.

In a possible implementation, the first device obtains the antenna quantity and/or the data stream quantity of the second device in two manners. In a first manner, the first device receives an antenna quantity specified by one or more second devices to be sent to the first device. In a second manner, the first device receives an antenna quantity that is broadcast by the second device to each device in a multi-device cooperation system. Alternatively, the first device may obtain the antenna quantity and/or the data stream quantity of the second device in another manner.

In a possible implementation, a specific implementation in which the first device generates the information frame based on the antenna quantity and/or the data stream quantity of the first device and the antenna quantity and/or the data stream quantity of the second device is as follows: The first device determines a first antenna quantity and/or a first data stream quantity, and generates the information frame based on the first antenna quantity and/or the first data stream quantity. The first antenna quantity is a sum of the antenna quantity of the first device and the antenna quantity of the second device. The first data stream quantity is a sum of the data stream quantity of the first device and the data stream quantity of the second device.

For example, an example in which the first device determines the first antenna quantity and generates the information frame based on the first antenna quantity is used. It is assumed that the first device is an AP 1, and the second device includes an AP 2 and an AP 3. The AP 1 has two antennas, the AP 2 has two antennas, and the AP 3 has three antennas. The AP 1 determines, based on an antenna quantity (that is, 2) of the AP 1, an antenna quantity (that is, 2) of the AP 2, and an antenna quantity (that is, 3) of the AP 3, that the first antenna quantity is 7, and generates the information frame based on the first antenna quantity. The information frame indicates a CSD of each antenna of the AP 2 and a CSD of each antenna of the AP 3.

In a possible implementation, the first device may further determine a CSD of each antenna and/or a CSD of each data stream of the first device based on the antenna quantity and/or the data stream quantity of the first device and the antenna quantity and/or the data stream quantity of the second device. CSDs of antennas of the first device are different, CSDs of antennas of the second device are different, and a CSD of any antenna of the first device is different from a CSD of any antenna of the second device. CSDs of data streams of the first device are different, CSDs of data streams of the second device are different, and a CSD of any data stream of the first device is different from a CSD of any data stream of the second device. Optionally, if there are a plurality of second devices, CSDs of antennas between any two second devices are different.

For example, an example in which the first device determines the first antenna quantity and generates the information frame based on the first antenna quantity is used. It is assumed that the first device is an AP 1, and the second device includes an AP 2 and an AP 3. The AP 1 has two antennas, the AP 2 has two antennas, and the AP 3 has three antennas. The AP 1 determines, based on an antenna quantity (that is, 2) of the AP 1, an antenna quantity (that is, 2) of the AP 2, and an antenna quantity (that is, 3) of the AP 3, that the first antenna quantity is 7, and generates the information frame based on the first antenna quantity. The information frame indicates a C SD of each antenna of the AP 2 and a CSD of each antenna of the AP 3. As shown in Table 1, CSDs of antennas of the AP 1 to the AP 3 are CSDs included in a seventh row in Table 1. CSDs of the antennas of the AP 1 may be [0, -200], CSDs of the antennas of the AP 2 may be [-150, -25], and CSDs of the antennas of the AP 3 may be [-175, -75, -50]. It can be learned that the CSDs of the antennas of the AP 1 are different, the CSDs of the antennas of the AP 2 are different, and the CSDs of the antennas of the AP 3 are different. In addition, the CSDs of the antennas of the AP 1, the CSDs of the antennas of the AP 2, and the CSDs of antennas of the AP 3 are different. That the information frame is generated based on the first data stream quantity is similar, and details are not described herein again.

The following describes in detail two specific implementations 1 and 2 in which the information frame indicates the CSD of each antenna and/or the CSD of each data stream of the second device.
1. The information frame includes a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity. In other words, the first device may indicate the antenna sequence number and/or the data stream sequence number of the second device by using the information frame, and implicitly indicate the CSD of each antenna and/or the CSD of each data stream of the second device, so that the CSD of each antenna and/or the CSD of each data stream of the second device can be accurately indicated.

In a possible implementation, when the second device receives the information frame sent by the first device, and the information frame includes the first antenna quantity (the sum of the antenna quantity of the first device and the antenna quantity of the second device) and one or more antenna sequence numbers of the second device, the second device determines, according to a correspondence between the first antenna quantity and the CSD of the antenna in Table 1, a row to which the CSD of each antenna belongs in Table 1, determines, according to a correspondence between an antenna sequence number of each antenna based on the first antenna quantity and the CSD of the antenna, a column to which the CSD of each antenna belongs in Table 1, and determines the CSD of each antenna based on the row and the column to which the CSD of each antenna belongs in Table 1; and or
when the second device receives the information frame sent by the first device, and the information frame includes the first data stream quantity (the sum of the data stream quantity of the first device and the data stream quantity of the second device) and one or more data stream sequence numbers of the second device, the second device determines, according to a correspondence between the first data stream quantity and the CSD of the data stream in Table 2, a row to which the CSD of each data stream belongs in Table 2, determines, according to a correspondence between a data stream sequence number of each data stream based on the first data stream quantity and the CSD of the data stream, a column to which the CSD of each data stream belongs in Table 1, and determines the CSD of each data stream based on the row and the column to which the CSD of each data stream belongs in Table 2.

In a possible implementation, the antenna sequence number of the second device is a start antenna sequence number of the second device based on the first antenna quantity, and the data stream sequence number of the second device is a start data stream sequence number of the second device based on the first data stream quantity. The start antenna sequence number is a first antenna sequence number of the device based on the first antenna quantity. The start data stream sequence number is a sequence number of a first data stream of the device based on the first data stream quantity. The CSD of each antenna of the second device and/or the CSD of each data stream can be accurately indicated by using the start antenna sequence number of the second device, and there is no need to add a sequence number of each antenna and/or a sequence number of each data stream of the second device to the information frame. This helps reduce signaling overheads.

For example, an AP 1 has two antennas, an AP 2 has two antennas, and an AP 3 has three antennas. The AP 1 determines, based on the antenna quantity (that is, 2) of the AP 1, the antenna quantity (that is, 2) of the AP 2, and the antenna quantity (that is, 3) of the AP 3, that the first antenna quantity is 7. The two antennas of the AP 1 are an antenna 1 and an antenna 2. A sequence number of the antenna 1 is 1 based on the first antenna quantity. A sequence number of the antenna 2 is 2 based on the first antenna quantity. The two antennas of the AP 2 are an antenna 3 and an antenna 4. A sequence number of the antenna 3 is 3 based on the first antenna quantity. A sequence number of the antenna 4 is 4 based on the first antenna quantity. Three antennas of the AP 3 are an antenna 5, an antenna 6, and an antenna 7. A sequence number of the antenna 5 is 5 based on the first antenna quantity. A sequence number of the antenna 6 is 6 based on the first antenna quantity. A sequence number of the antenna 7 is 7 based on the first antenna quantity. A sequence number of a start antenna sequence number of the AP 1 based on the first antenna quantity is 1, a sequence number of a start antenna sequence number of the AP 2 based on the first antenna quantity is 3, and a sequence number of a start antenna sequence number of the AP 3 based on the first antenna quantity is 5. The information frame carries the first antenna quantity (that is, 7), the start antenna sequence number (that is, 3) of the AP 2, and the start antenna sequence number (that is, 5) of the AP 3 to indicate CSDs of the antenna 3 and the antenna 4 of the AP 2, CSDs of the antenna 5, the antenna 6, and the antenna 7 of the AP 3.

After receiving the information frame, the AP 2 and the AP 3 determine, based on the first antenna quantity 7 carried in the information frame, that the CSD of the antenna 1 to the CSD of the antenna 7 belong to the antenna CSDs in the seventh row of Table 1. The AP 2 determines, based on the start antenna sequence number 3 and the antenna quantity 2 of the AP 2, that the CSD of the antenna 3 and the CSD of the antenna 4 are [-150, -25] in a third column and a fourth column of the seventh row. The AP 3 determines, based on the start antenna sequence number 5 and the antenna quantity 3 of the AP 3, that the CSD of the antenna 5 to the CSD of the antenna 7 are [-100, -50, -200] in a fifth column, a sixth column, and a seventh column of the seventh row.

In another possible implementation, the antenna sequence number of the second device may alternatively be a sequence number of a last antenna based on the first antenna quantity, or may be a sequence number of any one or more antennas based on the first antenna quantity, and/or the data stream sequence number may be a sequence number of a last data stream of the device based on the first data stream quantity, or may be a sequence number of any one or more data streams in the device based on the first data stream quantity.

For example, an AP 1 has two antennas, an AP 2 has two antennas, and an AP 3 has three antennas. The AP 1 determines that the first antenna quantity is 7. A sequence number of a last antenna sequence number of the AP 2 based on the first antenna quantity is 1, a sequence number of a last antenna sequence number of the AP 2 based on the first antenna quantity is 4, and a sequence number of a last antenna sequence number of the AP 3 based on the first antenna quantity is 7. The information frame carries the first antenna quantity (that is, 7), the last antenna sequence number (that is, 4) of the AP 2, and the last antenna sequence number (that is, 7) of the AP 3 to indicate CSDs of two antennas of the AP 2 and CSDs of three antennas of the AP 3. After receiving the information frame, the AP 2 and the AP 3 determine, based on the first antenna quantity 7 carried in the information frame, that the CSD of the antenna 1 to the CSD of the antenna 7 belong to the antenna CSDs in the seventh row of Table 1. The AP 2 determines, based on the last antenna sequence number 4 and the antenna quantity 2 of the AP 2, that the CSD of the antenna 3 and the CSD of the antenna 4 are [-150, -25]. The AP 3 determines, based on the last antenna sequence number 7 and the antenna quantity 3 of the AP 3, that the CSD of the antenna 5 to the CSD of the antenna 7 are [-100, -50, -200].

In a possible implementation, an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device. The first target device is the first device or the second device, and the second target device is the first device or the second device. In other words, a smaller antenna quantity and/or data stream quantity of the device indicates a higher corresponding antenna sequence number and/or data stream sequence number, and a larger antenna quantity and/or data stream quantity of the device indicates a lower corresponding antenna sequence number and/or data stream sequence number. Because Table 1 shows only a CSD of each antenna when the antenna quantity is less than or equal to 8, when the first antenna quantity exceeds 8, the first device needs to randomly allocate an antenna CSD to an antenna whose antenna sequence number is greater than 8. Because Table 2 shows only a CSD of each data stream when the quantity of data streams is less than or equal to 8, when the first data stream quantity exceeds 8, the first device needs to randomly allocate a data stream CSD to a data stream whose data stream sequence number is greater than 8. Antenna sequence numbers and/or data stream sequence numbers corresponding to devices having small antenna quantities and/or small data stream quantities are placed ahead, so that the first device can accurately indicate antenna CSDs and/or data stream CSDs of more second devices, and a quantity of second devices to which antenna CSDs and/or data stream CSDs need to be randomly allocated can be reduced.

For example, the first device is an AP 1, and the second device includes an AP 2 and an AP 3. Two antennas of the AP 1 are an antenna 1 and an antenna 2. Four antennas of the AP 2 are an antenna 3, an antenna 4, an antenna 5, and an antenna 6. Three antennas of the AP 3 are an antenna 7, an antenna 8, and an antenna 9. The AP 1 determines sequence numbers of antennas of the AP 1, the AP 2, and the AP 3 in ascending order of antennas quantities of the three APs. Based on the first antenna quantity (a sum of the antenna quantities of the AP 1, the AP 2, and the AP 3) 9, the antenna 1 to the antenna 9 are arranged in a sequence of the antenna 1, the antenna 2, the antenna 7, the antenna 8, the antenna 9, the antenna 3, the antenna 4, the antenna 5, and the antenna 6. Based on the arrangement sequence of the antennas, the AP 1 determines that antenna sequence numbers of the antenna 1 and the antenna 2 of the AP 1 are 1 and 2 respectively, antenna sequence numbers of the antenna 3, the antenna 4, the antenna 5, and the antenna 6 of the AP 2 are 6, 7, 8, and 9 respectively, and antenna sequence numbers of the antenna 7, the antenna 8, and the antenna 9 of the AP 3 are 3, 4, and 5 respectively.

In a possible implementation, the information frame includes a user information field, the second device is in a one-to-one correspondence with the user information field, and the antenna sequence number and/or the data stream sequence number of the second device are/is included in the user information field corresponding to the second device. Optionally, each user information field includes an association identifier of one second device. The second device can determine, based on the association identifier, whether the user information field is a user information field corresponding to the second device.

In this possible implementation, the antenna sequence number and/or the data stream sequence number of the second device may be included in a first field in the user information field. The first field may be a newly added subfield in the user information field. Alternatively, the first field may be a reserved subfield in the user information field, or another field in the user information field. The antenna sequence number and/or the data stream sequence number of the second device are/is included in the user information field corresponding to the second device, so that the second device can accurately obtain the corresponding antenna sequence number and/or data stream sequence number.

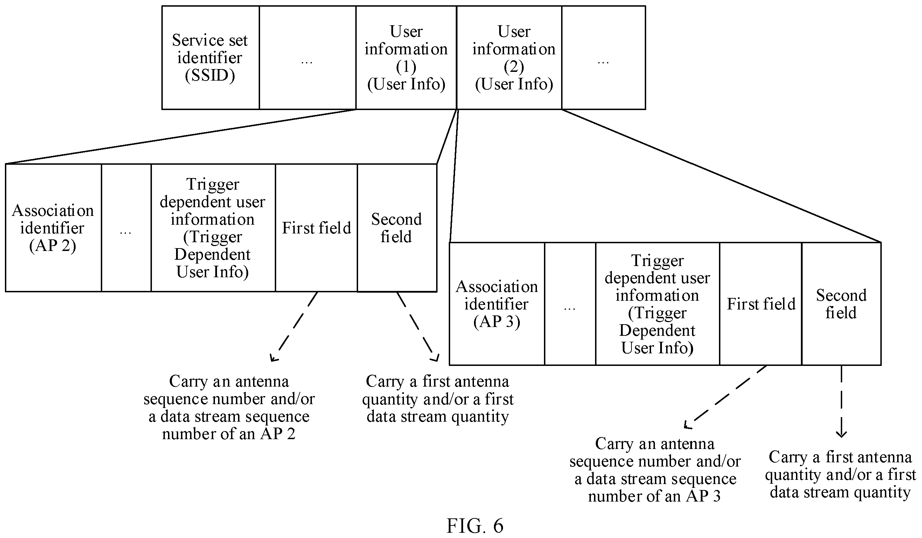

For example, FIG. 6 is a schematic diagram of a frame structure of the information frame. For example, the second device includes an AP 2 and an AP 3. As shown in FIG. 6, a user information field 1 corresponds to the AP 2, and a user information field 2 corresponds to the AP 3. In FIG. 6, an example in which the first field is a newly added subfield in the user information field is used. When the first field is the newly added subfield of the user information field, the newly added first field may be a last subfield of the user information field, or the newly added first field may be a first subfield of the user information field, or the newly added first field is located between any one or two subfields of the user information field (for example, a first field whose association identifier is the AP 2 in FIG. 6). This is not limited in this embodiment of this application. Optionally, when the first field carries an antenna sequence number and/or a data stream sequence number, a name of the first field may be another name.

In another possible implementation, the antenna sequence number and/or the data stream sequence number of the second device may also be carried in another field other than the user information field.

In a possible implementation, the first antenna quantity (a sum of the antenna quantity of the first device and the antenna quantity of the second device) and/or the first data stream quantity (a sum of the data stream quantity of the first device and the data stream quantity of the second device) may be included in a newly added second field in the user information field. The newly added second field may be a last field of the user information field (for example, a second field whose association identifier is the AP 2 in FIG. 6), or the newly added second field may be a first subfield of the user information field, or the newly added second field is located between any one or two subfields of the user information field. This is not limited in this embodiment of this application. Alternatively, the second field and the first field may be a same field.

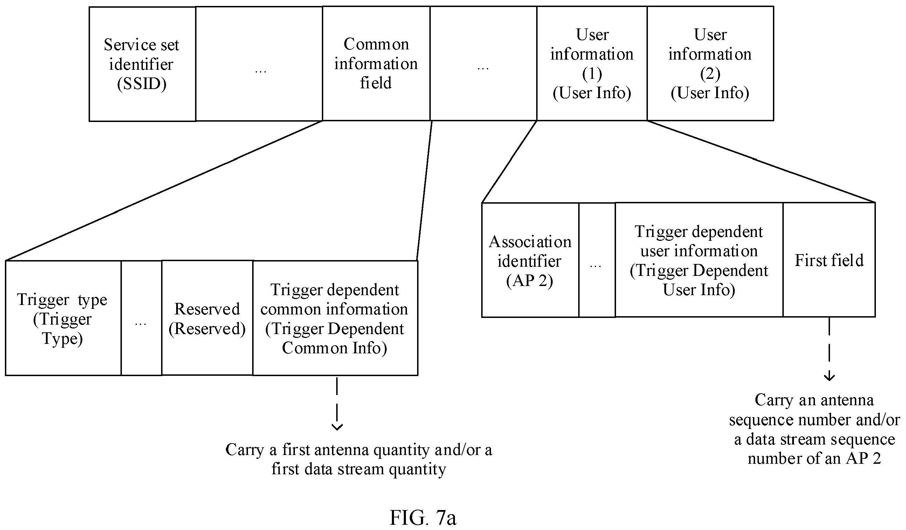

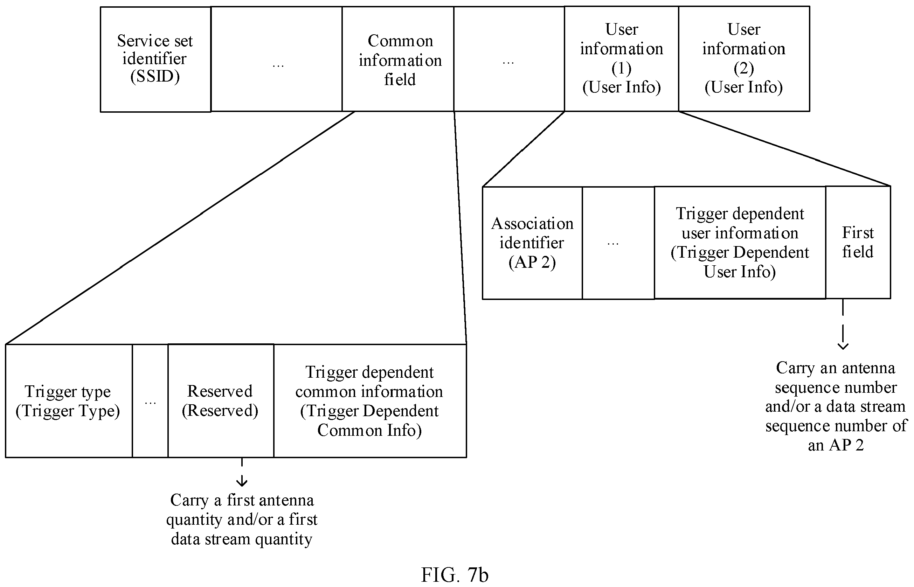

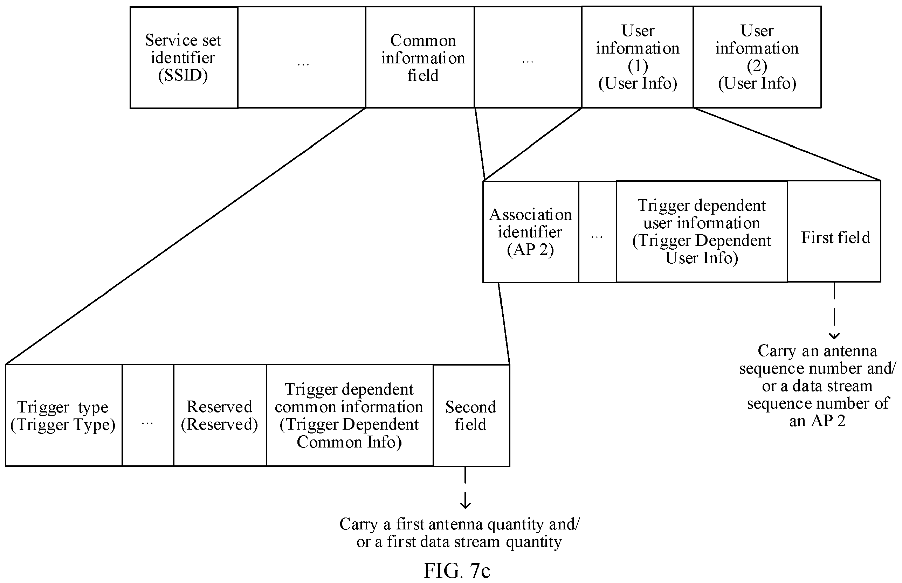

In another possible implementation, the information frame includes a common information field, and the first antenna quantity and/or the first data stream quantity are/is included in the common information field. The first antenna quantity and/or the first data stream quantity are/is included in a second field in the common information field, and are used by the device to determine, based on the first antenna quantity, a row to which a CSD of each antenna belongs in Table 1, and/or used by the device to determine, based on the first data stream quantity, a row to which a CSD of each data stream belongs in Table 2. FIG. 7a, FIG. 7b, and FIG. 7c are respectively schematic diagrams of three frame structures of the information frame. The common information field includes but is not limited to the following subfields: a trigger type, an uplink HE-SIG-A2 reservation, a reserved field, and trigger dependent common information. The second field may be a trigger dependent common information subfield (as shown in FIG. 7a) in the common information field, or the second field may be a reserved subfield (as shown in FIG. 7b) in the common information field, or the second field may be a newly added subfield (as shown in FIG. 7c) in the common information field. The first antenna quantity and/or the first data stream quantity are/is common information that each second device needs to obtain. Based on this optional manner, the first antenna quantity and/or the first data stream quantity do/does not need to be carried in a user information field corresponding to each second device. Compared with the foregoing storing the first antenna quantity and/or the first data stream quantity in the user information field corresponding to each second device, this method helps reduce signaling overheads.

2. The information frame includes a CSD of each antenna and/or a CSD of each data stream of the second device. In other words, the first device explicitly indicates the CSD of each antenna and/or the CSD of each data stream of the second device by using the information frame, and the second device does not need to separately determine the CSD of each corresponding antenna and/or the CSD of each corresponding data stream, so that the CSD of each antenna and/or the CSD of each data stream can be accurately indicated of the second device.

In a possible implementation, a specific implementation in which the first device generates the information frame based on the antenna quantity and/or the data stream quantity of the first device and the antenna quantity and/or the data stream quantity of the second device is as follows: The first device determines a CSD of each antenna of the second device from CSDs of antennas corresponding to the first antenna quantity, where the first antenna quantity is a sum of the antenna quantity of the first device and the antenna quantity of the second device; the first device determines a CSD of each data stream of the second device from CSDs of data streams corresponding to the first data stream quantity, where the first data stream quantity is a sum of a data stream quantity of the first device and a data stream quantity of the second device; and the first device generates the information frame based on the CSD of each antenna and/or the CSD of each data stream of the second device.

In a possible implementation, the first device determines, based on the first antenna quantity (a sum of the antenna quantity of the first device and the antenna quantity of the second device), a row to which the CSD of each antenna of the second device belongs in Table 1. The first device determines a sequence number of each antenna of the first device and the second device, and determines, based on the sequence number of each the antenna, a column to which the CSD of each antenna of the second device belongs in Table 1. The first device determines the CSD of each antenna based on the row and the column to which the CSD of each antenna belongs in Table 1, and generates the information frame based on the CSD of each antenna of the second device; and/or
the first device determines, in Table 2 based on the first data stream quantity (a sum of the data stream quantity of the first device and the data stream quantity of the second device), a row to which the CSD of each data stream of the second device belongs. The first device determines a sequence number of each data stream of the first device and the second device, and determines, in Table 2 based on the sequence number of each data stream, the column to which the CSD of each data stream of the second device belongs. The first device determines the CSD of each data stream based on the row and the column to which the CSD of each data stream belongs in Table 2, and generates the information frame based on the CSD of each data stream of the second device.

For example, the first device determines the CSD of each antenna of the second device from the CSDs of antennas corresponding to the first antenna quantity, and generates the information frame based on the CSD of each antenna and/or the CSD of each data stream of the second device. Antennas of the AP 1 are an antenna 1 and an antenna 2, antennas of the AP 2 are an antenna 3, an antenna 4, and an antenna 5, and an antenna of the AP 3 are an antenna 6. The AP 1 determines, based on the sum of antenna quantities of the AP 1, the AP 2, and the AP 3, that the first antenna quantity is 6, and sequence numbers of the antennas based on the first antenna quantity are as follows: A sequence number of the antenna 6 of the AP 3 is 1, a sequence number of the antenna 1 of the AP 1 is 2, a sequence number of the antenna 2 of the AP 1 is 3, a sequence number of the antenna 3 of the AP 2 is 4, a sequence number of the antenna 4 of the AP 2 is 5, and a sequence number of the antenna 5 of the AP 2 is 6. The AP 1 determines, based on the first antenna quantity 6, that CSDs of the antenna 1 to the antenna 6 belong to a sixth row in Table 1. The AP 1 determines, based on a sequence number of each antenna, that columns to which the antenna 1 to the antenna 6 belong in Table 1 are respectively a second column, a third column, a fourth column, a fifth column, a sixth column, and a first column. The AP 1 determines, in Table 1 based on the row and the column to which the CSD of each antenna belongs, that the CSD of the antenna 6 of the AP 3 is [0] in the first column of the sixth row, the CSD of the antenna 1 of the AP 1 and the CSD of the antenna 2 of the AP 1 are respectively [-200, -25] in the second column and the third column of the sixth row, and the CSD of the antenna 3 to the CSD of the antenna 5 of the AP 2 are respectively [-150, -175, -125] of the fourth column, the fifth column, and the sixth column of the sixth row.

In a possible implementation, the information frame includes the user information field, the second device is in a one-to-one correspondence with the user information field, and the CSD of each antenna and/or the CSD of each data stream of the second device are/is included in the user information field corresponding to the second device. The first device separately adds the CSD of each antenna and/or the CSD of each data stream of the second device to the user information field corresponding to the second device, so that the second device accurately obtains the CSD of each antenna and/or the CSD of each data stream of the second device based on the corresponding user information field.

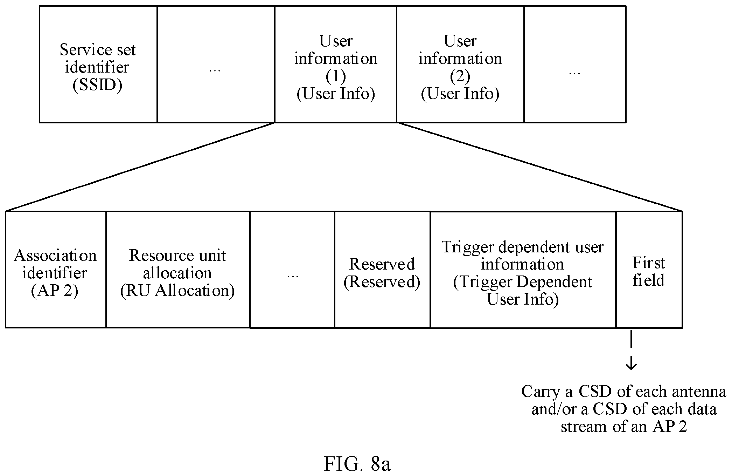

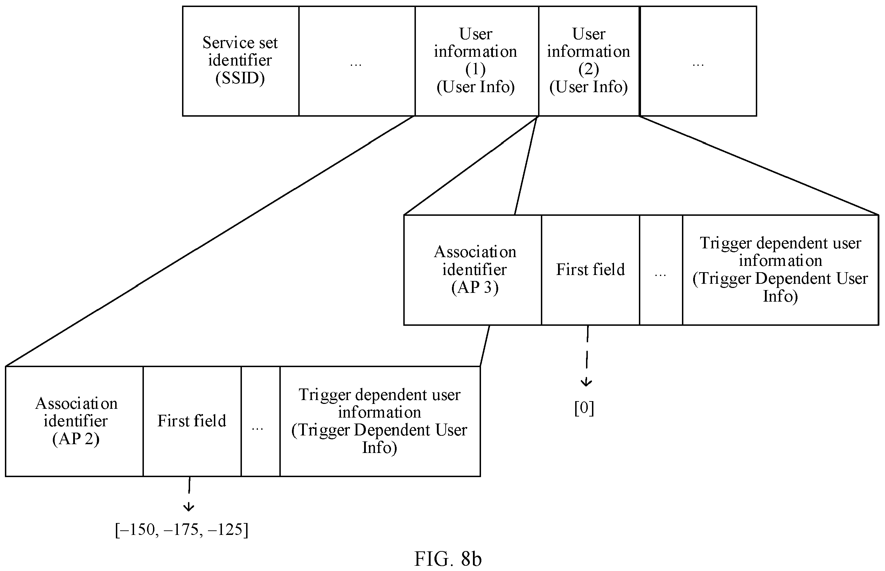

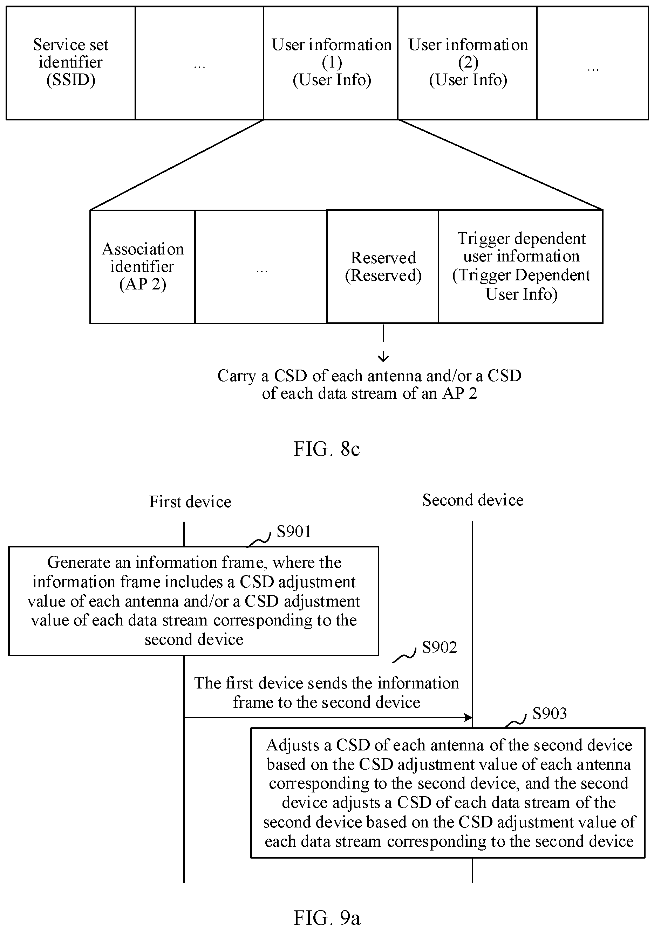

The CSD of each antenna of the second device and/or the CSD of each data stream may be carried in a first field in the user information field. The first field may be a newly added subfield of the user information field (a first field in FIG. 8a and a first field FIG. 8b), or may be a reserved subfield (for example, a first field in FIG. 8c) in the user information field, or another field in the user information field. For example, the first field is a newly added subfield in the user information field. When the first field is the newly added subfield of the user information field, the newly added first field may be located in a last field (for example, the first field in FIG. 8a) of the user information field, or the newly added first field may be a first subfield (for example, the first field in FIG. 8b) of the user information field, or the newly added first field is located between any one or two subfields in the user information field. This is not limited in this embodiment of this application. Optionally, when the first field carries the CSD of each antenna and/or the CSD of each data stream of the second device, the name of the first field may be another name.

For example, the newly added first field may be a first subfield of the user information field. Referring to FIG. 8b, the information frame includes a user information field 1 and a user information field 2. The CSDs [-150, -175, -125] of all antennas of the AP 2 are carried in the first field that is newly added to the user information field and that corresponds to the AP 2. The CSD [0] of each antenna of the AP 3 is carried in the first field that is newly added to the user information field and that corresponds to the AP 3. The newly added first field is the first subfield of the user information field. The AP 2 and the AP 3 obtain CSD of each corresponding antenna based on the corresponding user information frame and the first field in the corresponding user information frame.

In a possible implementation, the one or more second devices receive an information frame sent by the first device, where the information frame includes the CSD of each antenna and/or the CSD of each data stream of the second device. The second device accurately obtains the CSD of each antenna and/or the CSD of each data stream of the second device based on the corresponding first field in the information frame.

In another possible implementation, the information frame includes the first antenna quantity, the antenna sequence number of the second device, and CSDs of antennas whose antenna sequence numbers are greater than 8. In this case, second devices whose antenna sequence numbers are 1 to 8 determine, according to the correspondence among the first antenna quantity, the antenna sequence number, and the CSDs of antennas in Table 1, that the CSDs of the antennas whose antenna sequence numbers are 1 to 8 is [0, -175, -150, -125, -25, -100, -50, - 200], and the second devices obtain the CSDs of the antennas whose antenna sequence numbers are greater than 8 in the information frame; and/or the information frame includes the first data stream quantity, the data stream sequence number of the second device, and CSDs of data streams whose data stream sequence numbers are greater than 8. In this case, second devices whose data stream sequence numbers are 1 to 8 determine, based on the correspondence among the first data stream quantity, the data stream sequence number, and the CSDs of data streams in Table 2, that the CSDs of all the data streams whose data stream sequence numbers are 1 to 8 are [0, -400, -200, -600, -350, -650, -100, -750]. The second devices obtain the CSDs of the data streams whose sequence number is greater than 8 in the information frame.

For example, the information frame includes the first antenna quantity, the antenna sequence number of the second device, and the CSD of the antennas whose antenna sequence number is greater than 8. An information frame sent by a first device STA 1 to second devices STA 2 and STA 3 carries a first antenna quantity 9, a start antenna sequence number 1 of the STA 1, a start antenna sequence number 3 of the STA 2, a start antenna sequence number 6 of the STA3, and a CSD [-20] of an antenna whose antenna sequence number is 9. The STA 2 and the STA 3 determine a corresponding CSD of each antenna based on a correspondence among the first antenna quantity, respective start antenna sequence numbers, and the CSDs of antennas in Table 1: The STA1 determines that the CSDs of the antenna 1 and the antenna 2 are [0, -175]. The STA 2 determines that the CSD of the antenna 3 to the CSD of the antenna 5 are [-150, -125, -25]. The STA 3 determines that the CSD of the antenna 6 to the CSD of the antenna 8 are respectively [-100, -200, -20], and the STA 3 directly obtains, from the information frame, the antenna CSD [-20] whose antenna sequence number is 9.

502: The first device sends the information frame to the second device.

503: The second device determines the CSD of each antenna and/or the CSD of each data stream of the second device based on the information frame.

Specifically, after receiving the information frame sent by the first device, the second device determines, based on the information frame, the CSD of each antenna and/or the CSD of each data stream of the second device. For a specific implementation in which the second device determines the CSD of each antenna and/or the CSD of each data stream of the second device based on the information frame, refer to the foregoing descriptions. Details are not described herein again.

It can be learned that, according to the method described in FIG. 5, the first device generates the information frame based on the antenna quantity and/or the data stream quantity of the first device and the antenna quantity and/or the data stream quantity of the second device. The first device sends the information frame to the second device, so that the second device determines the CSD of each antenna and/or the CSD of each data stream of the second device based on the information frame, and the first device indicates the CSD of each antenna and/or the CSD of each data stream of the second device. In the foregoing method, the first device indicates the CSD of each antenna and/or the CSD of each data stream of the second device based on antenna quantities and/or data stream quantities of the plurality of devices. This helps ensure that CSDs of antennas of the first device are different, CSDs of antennas of the second device are different, and a CSD of any antenna of the first device are different from a CSD of any antenna of the second device. This helps avoid unintentional beamforming formed by overlapping beams of antennas/data streams of each device.

FIG. 9a is a schematic flowchart of another method for determining a cyclic shift delay CSD value according to an embodiment of this application. As shown in FIG. 9a, the method for determining a cyclic shift delay CSD value includes the following step 901 to step 903. The method shown in FIG. 9a may be executed by a first device and a second device. Alternatively, the method shown in FIG. 9a may be performed by a chip in the first device and a chip in the second device. Specifically:
901: The first device generates an information frame, where the information frame includes a CSD adjustment value of each antenna and/or a CSD adjustment value of each data stream corresponding to the second device.

The antenna CSD adjustment value is a value used to adjust a CSD of each antenna of the second device. The data stream CSD adjustment value is a value used to adjust a CSD of each data stream of the second device.

When the first device and the second device send signals to another device at the same time by using respective antennas and/or data streams, the first device and the second device respectively determine a CSD of each corresponding antenna and/or a CSD of each corresponding data stream according to Table 1 and/or Table 2. In the CSD of each antenna and/or the CSD of each data stream that are determined by the first device and the second device respectively according to Table 1 and/or Table 2, CSDs of some or all antennas and/or CSDs of some or all data streams of a plurality of second devices are the same, or CSDs of some or all antennas and/or CSDs of some or all data streams of the first device and the second devices are the same. Beams corresponding to antennas with a same CSD and/or data streams with a same CSD overlap and form unintentional beamforming.

For example, the CSDs of some or all antennas of the first device and the second device are the same. An antenna quantity of a first device AP 1 is 2. Correspondingly, a CSD of an antenna 1 is [0], and a CSD of an antenna 2 is [-200]. An antenna quantity of a second device AP 2 is 2. Correspondingly, a CSD of an antenna 3 is [0], and a CSD of an antenna 4 is [-200]. In this case, the CSD of the antenna 1 is the same as the CSD of the antenna 3, and the CSD of the antenna 2 is the same as the CSD of the antenna 4, which causes beam overlapping to form unintentional beamforming.

To avoid unintentional beamforming caused by beam overlapping, the first device generates the information frame used to indicate the second device to adjust the CSD of each antenna and/or the CSD of each data stream. The information frame carries the CSD adjustment value of each antenna and/or the CSD adjustment value of each data stream corresponding to the second device. The information frame may be a frame that can carry scheduling information, such as a trigger frame or a null data packet announcement (Null Data Packet Announcement, NDPA) frame.

In a possible implementation, the CSD adjustment value of each antenna is used to adjust the CSD of each antenna of the second device, so that CSDs of antennas of the first device are different, CSDs of antennas of the second device are different, and a CSD of any antenna of the first device is different from a CSD of any antenna of the second device; and/or, the CSD adjustment value of each data stream is used to adjust the CSD of each data stream of the second device, so that CSDs of data streams of the first device are different, CSDs of data streams of the second device are different, and a CSD of any data stream of the first device is different from a CSD of any data stream of the second device. This helps ensure that the CSD of each antenna and/or the CSD of each data stream of the first device and each second device are/is different, to avoid unintentional beamforming formed by overlapping beams of antennas/data streams of each device.

In a possible implementation, the second device adjusts the CSD of each antenna of the second device based on the CSD adjustment value of each antenna corresponding to the second device, to obtain an adjusted CSD of each antenna of the second device; and/or the second device adjusts the CSD of each data stream of the second device based on the CSD adjustment value of each data stream corresponding to the second device, to obtain an adjusted CSD of each data stream of the second device.

For example, the first device is an AP 1, and the second device includes an AP 2 and an AP 3. A CSD of a data stream 1 and a CSD of a data stream 2 of the AP 1 are [0, -400], a CSD of a data stream 3 and a CSD of a data stream 4 of the AP 2 are [0, -400], and a CSD of a data stream 5 and a CSD of a data stream 6 of the AP 3 are also [0, -400]. The first device AP 1 generates a CSD adjustment value of each data stream of the AP 2 as -25, and a CSD adjustment value of each data stream of the AP 3 as -50. The information frame carries the CSD adjustment value (-25) of each data stream of the AP 2 and the CSD adjustment value (-50) of each data stream of the AP 3. After the AP 2 and the AP 3 receive the information frame, the AP 2 adjusts the CSD of each data stream from [0, -400] to [-25, - 425] according to -25, and the AP 3 adjusts the CSD of each data stream from [0, -400] to [-50, -450] according to -50. CSDs of data streams of the AP 1 are different, CSDs of adjusted data streams of the AP 2 and the AP 3 are different, and a CSD of any data stream of the AP 1 is also different from a CSD of any adjusted data stream of the AP 2 and the AP 3. This can avoid overlapping of beams corresponding to the data streams of the AP 1, the AP 2, and the AP 3, and avoid unintentional beamforming.

In a possible implementation, the first device obtains the antenna quantity and/or the data stream quantity of the second device in two manners. In a first manner, the first device receives an antenna quantity specified by one or more second devices to be sent to the first device. In a second manner, the first device receives an antenna quantity that is broadcast by the second device to each device in a multi-device cooperation system. Alternatively, the first device may obtain the antenna quantity and/or the data stream quantity of the second device in another manner.

In a possible implementation, the first device determines a CSD of each antenna of the second device based on the antenna quantity of the second device, and determines, based on the CSD of each antenna of the first device and the CSD of each antenna of the second device, the CSD adjustment value of each antenna corresponding to the second device; and/or the first device determines a CSD of each data stream of the second device based on the data stream quantity of the second device, and determines, based on the CSD of each data stream of the first device and the CSD of each data stream of the second device, the CSD adjustment value of each data stream corresponding to the second device. In other word, the second device may adjust the CSD of each antenna and/or the CSD of each data stream by using the CSD adjustment value of each antenna and/or the CSD adjustment value of each data stream. This helps avoid unintentional beamforming formed by overlapping beams of antennas/data streams of each device.

Two possible implementation methods in which the first device determines the CSD of each antenna of the second device based on the antenna quantity of the second device are as follows:
In a first possible implementation method, the first device determines, based on a correspondence between a first antenna quantity (a sum of the antenna quantity of the first device and the antenna quantity of the second device) and CSDs of antennas in Table 1, a row to which the CSD of each antenna of the second device belongs in Table 1. The first device determines sequence numbers of all antennas of the first device and the second device, and determines, based on a correspondence between a sequence number of each antenna and CSDs of antennas in Table 1, a column to which the CSD of each antenna of the second device belongs in Table 1. The first device determines the CSD of each antenna according to a row and a column to which the CSD of each antenna belongs in Table 1; and/or
the first device determines, according to the correspondence between the first data stream quantity (the sum of the data stream quantity of the first device and the data stream quantity of the second device) and CSDs of data streams in Table 2, a row to which the CSD of each data stream of the second device belongs in Table 2. The first device determines a sequence number of each data stream of the first device and the second device, and determines, according to the correspondence between the sequence number of each data stream and the CSDs of data streams in Table 2, a column to which the CSD of each data stream of the second device belongs in Table 2. The first device determines the CSD of each data stream according to a row and a column to which the CSD of each data stream belongs in Table 2.

In a second possible implementation method, the first device may further directly obtain the CSD of each antenna sent by the second device, where the CSD of each antenna sent by the second device is determined by each second device according to the correspondence among the first antenna quantity, the sequence number of each antenna, and the CSDs of antennas in Table 1; and/or the first device directly obtains the CSD of each data stream sent by the second device, where the CSD of each data stream sent by the second device is determined by each second device according to the correspondence among the first data stream quantity, the sequence number of each data stream, and the CSDs of data streams in Table 2.

In a possible implementation, the first device determines whether a same value exists in CSDs of all antennas and/or CSDs of all data streams of the first device and the second device, and if the same value exists, the first device determines the CSD adjustment value of each antenna of the second device and/or the CSD adjustment value of each data stream. A plurality of antennas of each second device correspond to a CSD adjustment value of one antenna, and a plurality of data streams of each second device correspond to a CSD adjustment value of one data stream. In other words, the CSD adjustment value of each antenna may be used to adjust CSDs of one or more antennas corresponding to one second device, and a CSD adjustment value of each data stream may be used to adjust CSDs of one or more data streams corresponding to one second device.

For example, when an antenna quantity of a first device AP 1 is 2. Correspondingly, a CSD of an antenna 1 is [0], and a CSD of an antenna 2 is [-200]. An antenna quantity of a second device AP 2 is 2. Correspondingly, a CSD of an antenna 3 is [0], and a CSD of an antenna 4 is [-200]. An antenna quantity of a second device AP 3 is 3. Correspondingly, a CSD of an antenna 5 is [0], a CSD of an antenna 6 is [-100], and a CSD of an antenna 7 is [-200]. In this case, the CSD of the antenna 1, the CSD of the antenna 3, and the CSD of the antenna 5 are the same, and the CSD of the antenna 2, the CSD of the antenna 4, and the CSD of the antenna 7 are the same. The AP 1 determines that a CSD adjustment value of each antenna of the AP 2 is -25, which is used to indicate the AP 2 to adjust antenna CSDs of the antenna 3 and the antenna 4 according to -25, and determines a CSD adjustment value of each antenna of the AP 3 is -50, which is used to indicate the AP 3 to adjust antenna CSDs of the antenna 5, the antenna 6, and the antenna 7 according to -50.

In a possible implementation, the information frame includes a common information field, and the CSD adjustment value of each antenna and/or the CSD adjustment value of each data stream corresponding to the second device are/is included in the common information field; or the information frame includes a user information field, the second device is in a one-to-one correspondence with the user information field, and the CSD adjustment value of each antenna and/or a CSD adjustment value of each data stream corresponding to the second device are/is included in the user information field corresponding to the second device.

In a possible implementation, the information frame includes a user information field, the second device is in a one-to-one correspondence with the user information field, and the CSB adjustment value of each antenna and/or the CSB adjustment value of each data stream corresponding to the second device are/is included in a first field in the user information field corresponding to the second device. The first field may be a newly added subfield in the user information field. Alternatively, the first field may be a reserved subfield in the user information field, or another field in the user information field. This helps the second device accurately indicate the CSD adjustment value of each antenna and/or the CSD adjustment value of each data stream of the second device.

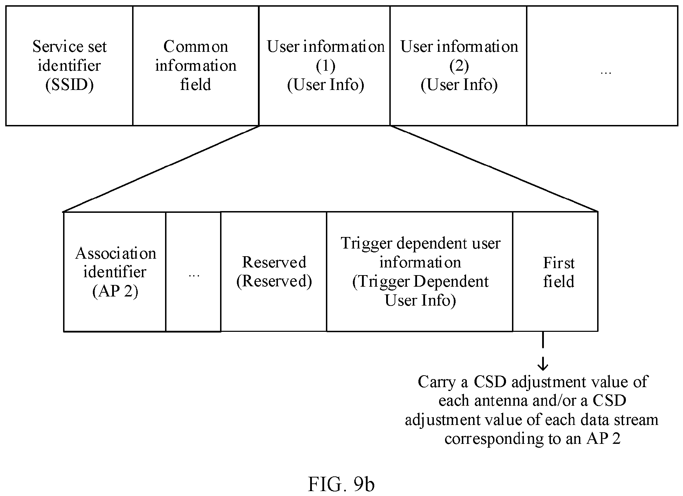

For example, FIG. 9b is a schematic diagram of a frame structure of the information frame. An example in which the first field is the newly added subfield in the user information field is used. When the first field is the newly added subfield of the user information field, the newly added first field may be a last subfield of the user information field (for example, a first field whose association identifier is an AP 2 in FIG. 9b), or the newly added first field may be a first subfield of the user information field, or the newly added first field is located between any one or two subfields of the user information field. Optionally, when the first field carries an antenna sequence number and/or a data stream sequence number, a name of the first field may be another name. This is not limited in this embodiment of this application.

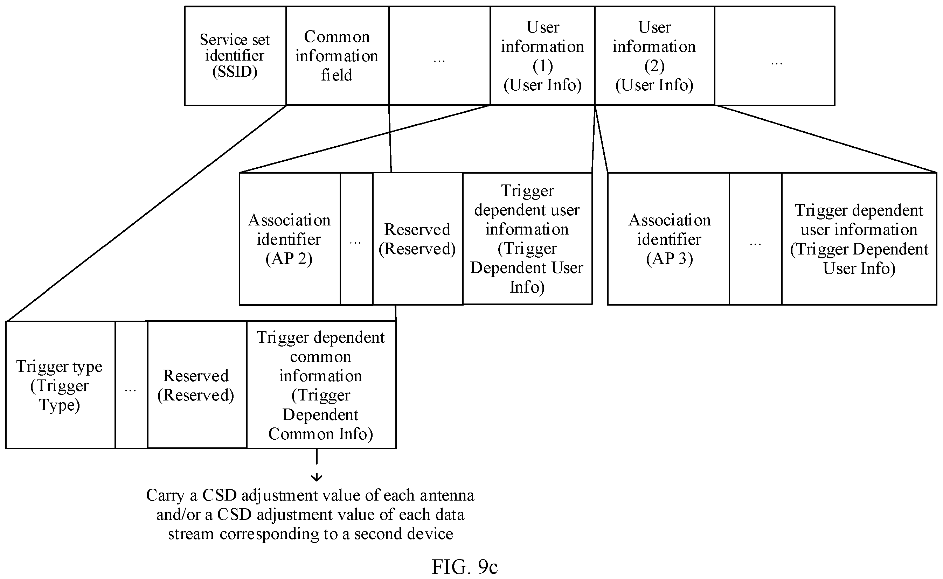

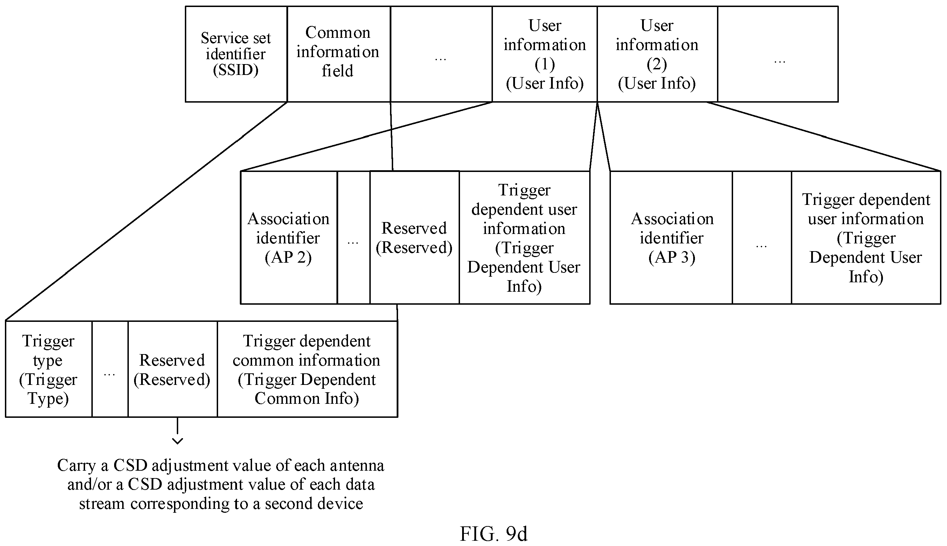

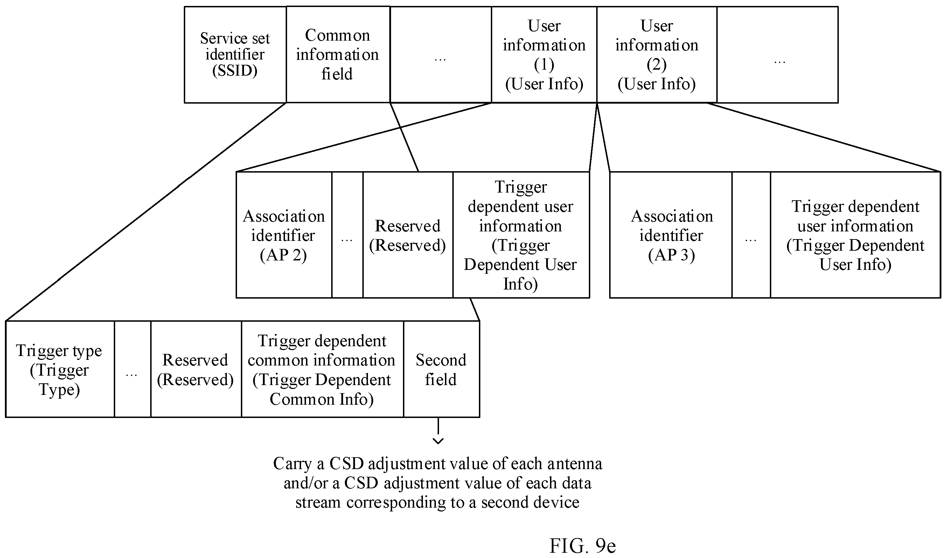

In a possible implementation, the information frame includes a common information field, and the CSD adjustment value of each antenna and/or the CSD adjustment value of each data stream corresponding to the second device are/is included in a second field in the common information field. Based on this optional manner, the CSD adjustment value of each antenna and/or the CSD adjustment value of each data stream of the second device do/does not need to be carried in a plurality of fields corresponding to each second device. This helps reduce signaling overheads. The second field may be a trigger dependent common information subfield (as shown in FIG. 9c) in the common information field, or the second field may be a reserved subfield (as shown in FIG. 9d) in the common information field, or the second field may be a newly added subfield (as shown in FIG. 9e) in the common information field.

When the second field is a newly added subfield of the common information field, the newly added second field may be a last subfield of the common information field (as shown in FIG. 9e), or the newly added second field may be a first subfield of the common information field, or the newly added second field is located between any one or two subfields of the common information field. Optionally, when the second field carries an antenna sequence number and/or a data stream sequence number, a name of the second field may be another name. This is not limited in this embodiment of this application.

For example, the first device adds the CSD adjustment value -25 of each antenna of the AP 2 to the newly added second field in the common information field, so that after receiving the information frame, the AP 2 accesses the newly added second field in the common information field, to obtain the CSD adjustment value -25 of each antenna.

902: The first device sends the information frame to the second device.

903: The second device adjusts the CSD of each antenna of the second device based on the CSD adjustment value of each antenna corresponding to the second device, and the second device adjusts the CSD of each data stream of the second device based on the CSD adjustment value of each data stream corresponding to the second device. In this way, CSDs of data streams of the first device are different, CSDs of data streams of the second device are different, and a CSD of any data stream of the first device is different from a CSD of any data stream of the second device.

Specifically, the second device receives the information frame sent by the first device, where the information frame carries the CSD adjustment value of each antenna and/or the CSD adjustment value of each data stream. The second device adjusts the CSD of each antenna of the second device based on the CSD adjustment value of each antenna corresponding to the second device, and/or adjusts the CSD of each data stream of the second device based on the CSD adjustment value of each data stream corresponding to the second device. For a specific implementation in which the second device adjusts the CSD of each antenna and/or the CSD of each data stream based on the CSD adjustment value of each antenna and/or the CSD adjustment value of each data stream, refer to the foregoing descriptions. Details are not described herein again.

In a possible implementation, the second device performs cyclic shift calculation on the CSD of each antenna of the second device based on the CSD adjustment value of each antenna corresponding to the second device, to obtain the adjusted CSD of each antenna of the second device; and the second device performs the cyclic shift calculation on the CSD of each data stream of the second device based on the CSD adjustment value of each data stream corresponding to the second device, to obtain the adjusted CSD of each data stream of the second device. After the adjustment, the CSD of each antenna needs to be less than or equal to -200 and greater than or equal to 0. Therefore, the second device performs the cyclic shift calculation on the CSD of each antenna of the second device based on the CSD adjustment value of each antenna, to obtain the adjusted CSD of each antenna of the second device. The cyclic shift calculation may be a rightward cyclic shift calculation. The rightward cyclic shift calculation is: adding an initial CSD of an antenna and a CSD adjustment value of the antenna; and when a sum of the CSD adjustment value of the antenna and the initial CSD of the antenna is greater than -200ns, calculating a difference between the sum of the CSD adjustment value of the antenna and the initial CSD of the antenna and -200, performing a subtraction operation on the difference and -200, and determining a calculation result as the adjusted CSD of the antenna.

For example, when the CSD of the antenna 1 and the CSD of the antenna 2 of the AP 1 are [0, -200], the CSD of the antenna 3 and the CSD of the antenna 4 of the AP 2 are [0, -200], and the CSD of the antenna 5 to the CSD of the antenna 7 of the AP 3 are [0, -100, -200], the AP 2 and the AP 3 receive the information frame, where the information frame carries a CSD adjustment value -20 of each antenna of the AP 2, and a CSD adjustment value -30 of each antenna of the AP 3. The AP 2 and the AP 3 respectively perform the rightward cyclic shift calculation on the CSD of each antenna based on the CSD adjustment value. The AP 2 performs the rightward cyclic shift calculation on the CSD of each antenna according to -25: An adjusted CSD of the antenna 3 is 0 - 25 = -25, and an adjusted CSD of the antenna 4 is -200 - 25 = -225. Because -225 is greater than -200, a difference between -225 and -200 is -25, -200 - (-25) = -175 is calculated, and -175 is determined as the adjusted CSD of the antenna 4. The AP 3 performs the rightward cyclic shift calculation on the CSD of each antenna according to -30: An adjusted CSD of the antenna 5 is 0 - 30 = -30, an adjusted CSD of the antenna 6 is -100 - 30 = -130, and an adjusted CSD of the antenna 7 is - 200 - 30 = -230. Because -230 is greater than -200, a difference between -230 and -200 is -30, -200 - (-30) = -170 is calculated. The adjusted CSDs of the antenna 1 to the antenna 7 obtained through the rightward cyclic shift calculation are respectively 0, -200, -25, -175, -30, -130 and -170, and the CSDs of the antennas are different.

In a possible implementation, the second device performs the cyclic shift calculation on the CSD of each data stream of the second device based on the CSD adjustment value of each data stream, to obtain the adjusted CSD of each data stream of the second device. The cyclic shift calculation may be the rightward cyclic shift calculation. The rightward cyclic shift calculation is: adding an initial CSD of a data streams and a CSD adjustment value of the data stream, and determining a calculation result as the adjusted CSD of the data stream. For a specific implementation method, refer to the foregoing step of performing, by the second device, the cyclic shift calculation on the CSD of each antenna of the second device based on the CSD adjustment value of each antenna. Details are not described herein again.

In the foregoing embodiment, the first device generates the information frame including the CSD adjustment value of each antenna and/or the CSD adjustment value of each data stream corresponding to the second device, so that the second device separately adjusts the CSD of each antenna and/or the CSD of each data stream of the second device based on the CSD adjustment value of each antenna corresponding to the second device, so that the CSDs of the data streams of the first device are different, the CSDs of the data streams of the second device are different, and a CSD of any data stream of the first device is different from a CSD of any data stream of the second device. In this way, unintentional beamforming formed by overlapping beams of antennas/data streams of each device can be avoided.

In a possible implementation, when both the first device and the second device are member devices, the first device and the second device in the multi-device cooperation system have obtained respective device sequence numbers, where the device sequence numbers are used to indicate antenna sequence numbers of the devices based on the first antenna quantity and/or data stream sequence numbers of the devices based on the first data stream quantity. A smaller device sequence number indicates a higher corresponding antenna sequence number and/or data stream sequence number A larger device sequence number indicates a lower corresponding antenna sequence number and/or data stream sequence number. For example, device sequence numbers of the AP 1, the AP 2, and the AP 3 in FIG. 1 may be 1, 2, and 3 respectively. An antenna sequence number and/or a data stream sequence number of the AP 1 are/is smaller than an antenna sequence number and/or a data stream sequence number of the AP 2, and the antenna sequence number and/or the data stream sequence number of the AP 2 are/is smaller than an antenna sequence number and/or a data stream sequence number of the AP 3.

The first device and the second device obtain information of each other through information exchange. An information exchange manner may be a broadcast form, or information may be sequentially transferred based on device sequence numbers in ascending order. Exchanged information includes an antenna quantity and/or a data stream quantity of a sending device and a device sequence number of the sending device, so that each device knows the antenna quantity and/or the data stream quantity of the first device and the antenna quantity and/or the data stream quantity of the second device.

The first device and the second device separately calculate the first antenna quantity based on a sum of antenna quantities of the devices. The first device and the second device separately determine antenna sequence numbers of the first device and the second device based on an antenna quantity of a target device and device sequence numbers of the first device and the second device and the first antenna quantity, to determine a CSD of each antenna corresponding to the first device and the second device based on the first antenna quantity; and or the first device and the second device separately calculate the first data stream quantity based on a sum of the data stream quantities of the devices. The first device and the second device separately determine data stream sequence numbers of the first device and the second device based on a data stream quantity of the target device and the device sequence numbers of the first device and the second device and the first data stream quantity, to determine a CSD of each data stream corresponding to the first device and the second device based on the first data stream quantity.

Optionally, a specific method in which the first device and the second device separately determine antenna sequence numbers of the first device and the second device based on the antenna quantity of the target device and device sequence numbers of the first device and the second device and the first antenna quantity, and/or the first device and the second device separately determine data stream sequence numbers of the first device and the second device based on the data stream quantity of the target device and the device sequence numbers of the first device and the second device and the first data stream quantity is as follows:
The device determines a start antenna sequence number of the device based on a total antenna quantity of the target device, and determines a sequence number of each antenna of the device based on the antenna quantity of the device. The device determines a start data stream sequence number of the device based on a total data stream quantity of the target device, and determines a sequence number of each data stream of the device based on the data stream quantity of the device. The target device is one or more devices whose device sequence numbers are smaller than a device sequence number of the target device.

For example, a first device AP 1 and two second devices AP 2 and AP 3 exist in the multi-device cooperation system. A device sequence number of the AP 1 is 1, a device sequence number of the AP 2 is 2, and a device sequence number of the AP 3 is 3. The AP 1, the AP 2, and the AP 3 broadcast respective antenna quantity, where an antenna quantity of the AP 1 is 2, an antenna quantity of the AP 2 is 2, and an antenna quantity of the AP 3 is 3. The AP 1 is a target device of the AP 2. The AP 2 determines, based on the antenna quantity 2 of the AP 1, that a start antenna sequence number of the AP 2 is 3, and determines, based on the antenna quantity 2 of the AP 2, that sequence numbers of two antennas of the AP 2 are respectively 3 and 4. The AP 1 and the AP 2 are target devices of the AP 3. The AP 3 determines, based on a total antenna quantity 4 of the AP 1 and the AP 2, that a start antenna sequence number of the AP 3 is 5, and determines, based on the antenna quantity 3 of the AP 3, that sequence numbers of three antennas of the AP 3 are respectively 5, 6, and 7.

Optionally, a method for determining, by the first device and the second device, a CSD of each antenna and/or a CSD of each data stream corresponding to the first device and the second device is:

The first device and the second device separately determine, based on the first antenna quantity and a prestored correspondence among the first antenna quantity, the antenna quantity of the first device, the antenna quantity of the second device, and the CSDs of antennas in Table 1, a row to which the CSD of each antenna belongs in Table 1, determine, based on the antenna sequence number of each antenna based on the first antenna quantity, a column to which the CSD of each antenna belongs in Table 1, and determine the CSD of each antenna based on the row and the column to which the CSD of each antenna belongs in Table 1; and or
the first device and the second device separately determine, based on the first data stream quantity and a prestored correspondence among the first data stream quantity, the data stream quantity of the first device, the data stream quantity of the second device, and the CSDs of data streams in Table 2, a row to which the CSD of each antenna belongs in Table 1, determine, based on the data stream sequence number of each data stream based on the first data stream quantity, a column to which the CSD of each data stream belongs in Table 2, and determine the CSD of each data stream based on the row and the column to which the CSD of each data stream belongs in Table 1.

For example, the AP 1, the AP 2, and the AP 3 receive the antenna quantity broadcast by each device, and determine that the first antenna quantity is 7. The devices separately determine antenna sequence numbers of the devices: sequence numbers of two antennas of the AP 1 are respectively 1 and 2, sequence numbers of two antennas of the AP 2 are respectively 3 and 4, and sequence numbers of three antennas of the AP 3 are respectively 5, 6, and 7. The AP 1, the AP 2, and the AP 3 respectively determine, based on the first antenna quantity 7 and a prestored correspondence among the first antenna quantity, the antenna quantity of the first device, the antenna quantity of the second device, and the CSDs of antennas in Table 1, that the CSD of each antenna belongs to a seventh row in Table 1. The AP 1 determines, based on the antenna sequence numbers 1 and 2, that CSDs of the antennas are respectively [0] in a first column of the seventh row and [-200] in a second column of the seventh row. The AP 2 determines, based on the antenna sequence numbers 3 and 4, that CSDs of the antennas are respectively [-150] in a third column of the seventh row and [-25] in a fourth column of the seventh row. The AP 3 determines, according to the antenna sequence numbers 5, 6, and 7, that CSDs of the antennas are respectively [-100] in a fifth column of the seventh row, [-50] in a sixth column of the seventh row, and [-200] in a seventh column of the seventh row.

In the foregoing embodiment, the devices exchange the antenna quantity and/or the data stream quantity with each other, so that each device knows an antenna quantity and/or a data stream quantity of another device, and each device determines a CSD of each corresponding antenna and/or a CSD of each corresponding data stream based on a predetermined device arrangement sequence number, so that in a scenario in which the first device does not indicate the antenna quantity and/or the data stream quantity of the second device by using an information frame, unintentional beamforming formed by overlapping beams of antennas/data streams of each device can also be avoided.

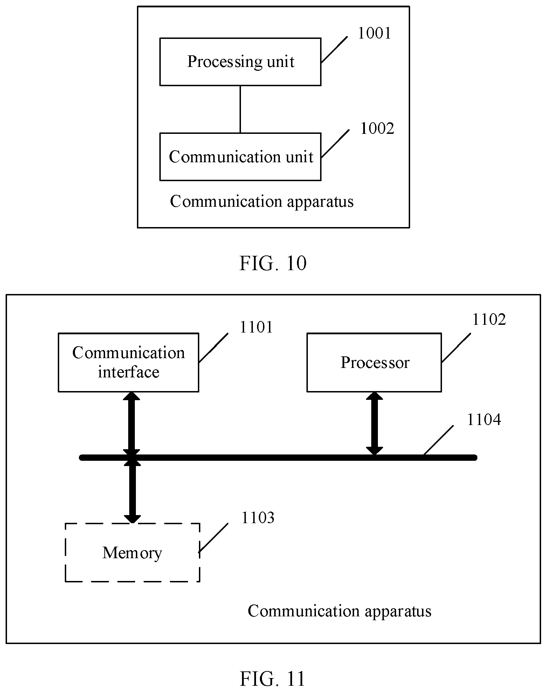

FIG. 10 is a schematic diagram of a structure of a communication apparatus according to an embodiment of this application. The communication apparatus shown in FIG. 10 may be configured to perform some or all functions of the first device in the method embodiment described in FIG. 5. The communication apparatus may alternatively be a chip system. The communication apparatus shown in FIG. 10 may include a processing unit 1001 and a communication unit 1002. The processing unit 1001 is configured to perform data processing. A receiving unit and a sending unit are integrated into the communication unit 1002. The communication unit 1001 may also be referred to as a transceiver unit. Alternatively, the communication unit 1002 may be split into a receiving unit and a sending unit. The processing unit 1001 and the communication unit 1002 below are similar, and details are not described below again. Specifically:

The processing unit 1001 is configured to generate, by using a first device, an information frame based on an antenna quantity and/or a data stream quantity of the first device and an antenna quantity and/or a data stream quantity of a second device, where the information frame is used to indicate a CSD of each antenna and/or a CSD of each data stream of the second device.

The communication unit 1002 is configured to send, by using the first device, the information frame to the second device.

In a possible implementation, the processing unit 1001 is further configured to determine, by using the first device, a CSD of each antenna and/or a CSD of each data stream of the first device based on the antenna quantity and/or the data stream quantity of the first device and the antenna quantity and/or the data stream quantity of the second device.

CSDs of antennas of the first device are different, CSDs of antennas of the second device are different, and a CSD of any antenna of the first device is different from a CSD of any antenna of the second device.

CSDs of data streams of the first device are different, CSDs of data streams of the second device are different, and a CSD of any data stream of the first device is different from a CSD of any data stream of the second device.

In a possible implementation, the information frame includes a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

In a possible implementation, the antenna sequence number of the second device is a start antenna sequence number of the second device based on the first antenna quantity, and the data stream sequence number of the second device is a start data stream sequence number of the second device based on the first data stream quantity.

In a possible implementation, an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device. The first target device is the first device or the second device, and the second target device is the first device or the second device.

In a possible implementation, the information frame includes a user information field, the second device is in a one-to-one correspondence with the user information field, and the antenna sequence number and/or the data stream sequence number of the second device are/is included in the user information field corresponding to the second device.

In a possible implementation, the information frame includes a common information field, and the first antenna quantity and/or the first data stream quantity are/is included in the common information field.

In a possible implementation, the processing unit 1001 is further configured to: determine, by using the first device, the CSD of each antenna of the second device from CSDs of antennas corresponding to a first antenna quantity, where the first antenna quantity is a sum of the antenna quantity of the first device and the antenna quantity of the second device; and/or determine, by using the first device, the CSD of each data stream of the second device from CSDs of data streams corresponding to a first data stream quantity, where the first data stream quantity is a sum of the data stream quantity of the first device and the data stream quantity of the second device; and generate, by using the first device, the information frame based on the CSD of each antenna and/or the CSD of each data stream of the second device, where the information frame includes the CSD of each antenna and/or the CSD of each data stream of the second device.

In a possible implementation, the information frame includes a user information field, the second device is in a one-to-one correspondence with the user information field, and the CSD of each antenna and/or the CSD of each data stream of the second device are/is included in the user information field corresponding to the second device.

The communication apparatus shown in FIG. 10 may be configured to perform some or all functions of the second device in the method embodiment described in FIG. 5. The communication apparatus may alternatively be a chip system. The communication apparatus shown in FIG. 10 may include a processing unit 1001 and a communication unit 1002.

The communication unit 1002 is configured to receive, by using a second device, an information frame sent by a first device, where the information frame is used to indicate a CSD of each antenna and/or a CSD of each data stream of the second device.

The processing unit 1001 is configured to determine, by using the second device, the CSD of each antenna and/or the CSD of each data stream of the second device based on the information frame.

In a possible implementation, CSDs of antennas of the first device are different, CSDs of antennas of the second device are different, and a CSD of any antenna of the first device is different from a CSD of any antenna of the second device; and CSDs of data streams of the first device are different, CSDs of data streams of the second device are different, and a CSD of any data stream of the first device is different from a CSD of any data stream of the second device.

In a possible implementation, the information frame includes a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

In a possible implementation, the antenna sequence number of the second device is a start antenna sequence number of the second device based on the first antenna quantity, and the data stream sequence number of the second device is a start data stream sequence number of the second device based on the first data stream quantity.

In a possible implementation, an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device. The first target device is the first device or the second device, and the second target device is the first device or the second device.

In a possible implementation, the information frame includes a user information field, the second device is in a one-to-one correspondence with the user information field, and the antenna sequence number and/or the data stream sequence number of the second device are/is included in the user information field corresponding to the second device.

In a possible implementation, the information frame includes a common information field, and the first antenna quantity and/or the first data stream quantity are/is included in the common information field.

In a possible implementation, the information frame includes the CSD of each antenna and/or the CSD of each data stream of the second device, the information frame includes a user information field, the second device is in a one-to-one correspondence with the user information field, and the CSD of each antenna and/or the CSD of each data stream of the second device are/is included in the user information field corresponding to the second device.

The communication apparatus shown in FIG. 10 may be configured to perform some or all functions of the first device in the method embodiment described in FIG. 9a. The communication apparatus may alternatively be a chip system. The communication apparatus shown in FIG. 10 may include a processing unit 1001 and a communication unit 1002. The processing unit 1001 is configured to generate, by using a first device, an information frame, where the information frame includes a CSD adjustment value of each antenna and/or a CSD adjustment value of each data stream corresponding to a second device.

The communication unit 1002 is configured to send, by using the first device, the information frame to the second device.

In a possible implementation, the CSD adjustment value of each antenna is used to adjust the CSD of each antenna of the second device, so that CSDs of antennas of the first device are different, CSDs of antennas of the second device are different, and a CSD of any antenna of the first device is different from a CSD of any antenna of the second device; and/or, the CSD adjustment value of each data stream is used to adjust the CSD of each data stream of the second device, so that CSDs of data streams of the first device are different, CSDs of data streams of the second device are different, and a CSD of any data stream of the first device is different from a CSD of any data stream of the second device.

In a possible implementation, the processing unit 1001 is further configured to determine, by using the first device, a CSD of each antenna of the second device based on the antenna quantity of the second device, and determine, based on the CSD of each antenna of the first device and the CSD of each antenna of the second device, the CSD adjustment value of each antenna corresponding to the second device; and/or determine, by using the first device, a CSD of each data stream of the second device based on the data stream quantity of the second device, and determine, based on the CSD of each data stream of the first device and the CSD of each data stream of the second device, the CSD adjustment value of each data stream corresponding to the second device.

In a possible implementation, the information frame includes a common information field, and the CSD adjustment value of each antenna and/or the CSD adjustment value of each data stream corresponding to the second device are/is included in the common information field; or the information frame includes a user information field, the second device is in a one-to-one correspondence with the user information field, and the CSD adjustment value of each antenna and/or a CSD adjustment value of each data stream corresponding to the second device are/is included in the user information field corresponding to the second device.

The communication apparatus shown in FIG. 10 may be configured to perform some or all functions of the second device in the method embodiment described in FIG. 9a. The communication apparatus may alternatively be a chip system. The communication apparatus shown in FIG. 10 may include a processing unit 1001 and a communication unit 1002. The communication unit 1002 is configured to receive, by using a second device, an information frame sent by a first device, where the information frame includes a CSD adjustment value of each antenna and/or a CSD adjustment value of each data stream corresponding to the second device.

The processing unit 1001 is configured to adjust, by using the second device, a CSD of each antenna of the second device based on the CSD adjustment value of each antenna corresponding to the second device.

In a possible implementation, the processing unit 1001 is further configured to adjust, by using the second device, the CSD of each antenna of the second device based on the CSD adjustment value of each antenna corresponding to the second device, so that CSDs of antennas of the first device are different, CSDs of antennas of the second device are different, and a CSD of any antenna of the first device is different from a CSD of any antenna of the second device; and/or adjust, by using the second device, the CSD of each data stream of the second device based on the CSD adjustment value of each data stream corresponding to the second device, so that CSDs of data streams of the first device are different, CSDs of data streams of the second device are different, and a CSD of any data stream of the first device is different from a CSD of any data stream of the second device.

In a possible implementation, the information frame includes a common information field, and the CSD adjustment value of each antenna and/or the CSD adjustment value of each data stream corresponding to the second device are/is included in the common information field; or the information frame includes a user information field, the second device is in a one-to-one correspondence with the user information field, and the CSD adjustment value of each antenna and/or a CSD adjustment value of each data stream corresponding to the second device are/is included in the user information field corresponding to the second device.

In a possible implementation, the processing unit 1001 is further configured to perform, by using the second device based on the CSD adjustment value of each antenna corresponding to the second device, cyclic shift calculation on a CSD of each antenna of the second device, to obtain a CSD that is of each antenna and that is adjusted by the second device; and perform, by using the second device based on the CSD adjustment value of each data stream corresponding to the second device, the cyclic shift calculation on a CSD of each data stream of the second device, to obtain a CSD that is of each data stream and that is adjusted by the second device.

FIG. 11 shows a communication apparatus 1100 according to an embodiment of this application. The communication apparatus 1100 is configured to implement a function of the first device or the second device in the method embodiment described in FIG. 5, or is configured to implement a function of the first device or the second device in the method embodiment described in FIG. 9a. The apparatus may be the first device or the second device, or the apparatus may be an apparatus used for the first device. The apparatus used for the first device may be a chip system or a chip in the first device. The apparatus used in the second device may be a chip system or a chip in the second device. The chip system may include a chip, or may include a chip and another discrete component.

The communication apparatus 1100 includes at least one processor 1102, configured to implement a data processing function of the first device or the second device in determining a cyclic shift delay CSD value in this application.

The apparatus 1100 may further include a communication interface 1101, configured to implement receiving and sending operations of the first device or the second device in determining the cyclic shift delay CSD value in this application.

In this embodiment of this application, the communication interface may be a transceiver, a circuit, a bus, a module, or a communication interface of another type, and is configured to communicate with another device by using a transmission medium. For example, the communication interface 1101 is used by a component in the apparatus 1100 to communicate with the another device. The processor 1102 receives and sends data through the communication interface 1101, and is configured to implement the methods in the foregoing method embodiments.

The apparatus 1100 may further include at least one memory 1103, configured to store program instructions and/or data. The memory 1103 is coupled to the processor 1102. The coupling in this embodiment of this application is indirect coupling or a communication connection between apparatuses, units, or modules for information exchange between the apparatuses, the units, or the modules, and may be in electrical, mechanical, or other forms. The processor 1102 may cooperatively perform an operation with the memory 1103. The processor 1102 may execute the program instructions stored in the memory 1103. At least one of the at least one memory may be included in the processor

This embodiment of this application does not limit a specific connection medium between the communication interface 1101, the processor 1102, and the memory 1103. In this embodiment of this application, in FIG. 11, the memory 1103, the processor 1102, and the communication interface 1101 are connected by using a bus 1104. The bus is represented by a bold line in FIG. 11. A manner of connection between other parts is merely an example for description, and no limitation is imposed. The bus may be classified into an address bus, a data bus, a control bus, and the like. For ease of representation, only one bold line is used to represent the bus in FIG. 11, but this does not mean that there is only one bus or only one type of bus.

When the apparatus 1100 is specifically an apparatus for a station, a first station, a second station, or an access point, for example, when the apparatus 1100 is specifically a chip or a chip system, a signal output or received by the communication interface 1101 may be a baseband signal. When the apparatus 1100 is specifically the station, the first station, the second station, or the access point, a signal output or received by the communication interface 1101 may be a radio frequency signal. In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by using a combination of hardware in the processor and a software module.

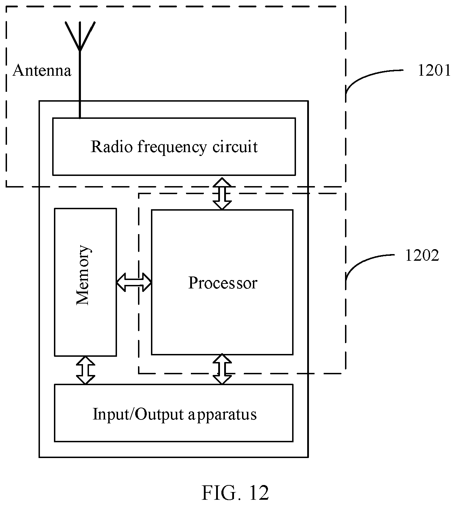

For example, FIG. 12 is a schematic diagram of a structure of another communication apparatus 1200 according to an embodiment of this application. The communication apparatus 1200 may be a first device or a second device. The communication apparatus 1200 may perform operations performed by the first device or the second device in the foregoing method embodiments.

For ease of description, FIG. 12 shows only main components of the communication apparatus 1200. As shown in FIG. 12, the communication apparatus 1200 includes a processor, a memory, a radio frequency circuit, an antenna, and an input/output apparatus. The processor is mainly configured to: process a communication protocol and communication data, control the entire communication apparatus 1200, execute a software program, and process data of the software program, for example, configured to support the communication apparatus 1200 in performing the procedures described in FIG. 5 and FIG. 9a. The memory is mainly configured to store a software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The communication apparatus 1200 may further include an input/output apparatus, for example, a touchscreen, a display screen, or a keyboard that is mainly configured to receive data entered by a user and output data to the user. It should be noted that some types of communication apparatuses 1200 may have no input/output apparatus.

After the communication apparatus 1200 is powered on, the processor may read a software program in a storage unit, interpret and execute the software program, and process data of the software program. When data needs to be wirelessly sent, after performing baseband processing on to-be-sent data, the processor outputs the baseband signal to the radio frequency circuit. After performing radio frequency processing on the baseband signal, the radio frequency circuit sends the radio frequency signal in an electromagnetic wave form by using the antenna. When data is sent to the communication apparatus 1200, the radio frequency circuit receives the radio frequency signal by using the antenna, converts the radio frequency signal into the baseband signal, and outputs the baseband signal to the processor. The processor converts the baseband signal into data, and processes the data.

A person skilled in the art may understand that, for ease of description, FIG. 12 shows only one memory and one processor. In an actual communication apparatus 1200, there may be a plurality of processors and memories. The memory may also be referred to as a storage medium, a storage device, or the like. This is not limited in the embodiments of this application.

In an optional implementation, the processor may include a baseband processor and a central processing unit (central processing unit, CPU). The baseband processor is mainly configured to process a communication protocol and communication data, and the CPU is mainly configured to control the entire communication apparatus 1200, execute a software program, and process data of the software program. Optionally, the processor may alternatively be a network processor (network processor, NP) or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory (volatile memory), for example, a random access memory (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

For example, in this embodiment of this application, as shown in FIG. 12, an antenna and a radio frequency circuit having a transceiver function may be considered as a communication unit 1201 of the communication apparatus 1200, and a processor having a processing function may be considered as a processing unit 1202 of the communication apparatus 1200.

The communication unit 1201 may also be referred to as a transceiver machine, a transceiver, a transceiver apparatus, a transceiver unit, or the like, and is configured to implement the sending and receiving functions. Optionally, a component that is in the communication unit 1201 and that is configured to implement the receiving function may be considered as a receiving unit, and a component that is in the communication unit 1201 and that is configured to implement the sending function may be considered as a sending unit. In other words, the communication unit 1201 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

In some embodiments, the communication unit 1201 and the processing unit 1202 may be integrated into one device, or may be separated as different devices. In addition, the processor and the memory may be integrated into one device, or may be separated as different devices.

The communication unit 1201 may be configured to perform receiving and sending operations of the communication apparatus 1200 in the foregoing method embodiments. The processing unit 1202 may be configured to perform a data processing operation of the communication apparatus 1200 in the foregoing method embodiments.

An embodiment of this application further provides a computer-readable storage medium. The computer-readable storage medium stores instructions. When the instructions run on a processor, method procedures in the foregoing method embodiments are implemented.

An embodiment of this application further provides a computer program product. When the computer program product runs on a processor, method procedures in the foregoing method embodiments are implemented.

It should be noted that, for brief description, the foregoing method embodiment is represented as a combination of a series of actions. However, a person skilled in the art should understand that this application is not limited to the described order of the actions, because according to this application, some operations may be performed in other orders or simultaneously. It should be further appreciated by persons skilled in the art that embodiments described in this specification all belong to preferred embodiments, and the involved actions and modules are not necessarily required by this application.

Cross reference may be made to descriptions of the embodiments provided in this application, and the descriptions of embodiments have different focuses. For a part not described in detail in an embodiment, refer to related descriptions of another embodiment. For ease of description and brevity, for functions of the apparatuses and devices provided in the embodiments of this application and operations performed by the apparatuses and devices, refer to related descriptions of the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A method for determining a cyclic shift delay CSD value, comprising:
generating, by a first device, an information frame based on an antenna quantity and/or a data stream quantity of the first device and an antenna quantity and/or a data stream quantity of a second device, wherein the information frame is used to indicate a CSD of each antenna and/or a CSD of each data stream of the second device; and
sending, by the first device, the information frame to the second device.

2. The method according to claim 1, wherein the method further comprises:
determining, by the first device, a CSD of each antenna and/or a CSD of each data stream of the first device based on the antenna quantity and/or the data stream quantity of the first device and the antenna quantity and/or the data stream quantity of the second device, wherein
CSDs of antennas of the first device are different, CSDs of antennas of the second device are different, and a CSD of any antenna of the first device is different from a CSD of any antenna of the second device; and
CSDs of data streams of the first device are different, CSDs of data streams of the second device are different, and a CSD of any data stream of the first device is different from a CSD of any data stream of the second device.

3. The method according to claim 1 or 2, wherein the information frame comprises a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

4. The method according to claim 3, wherein the antenna sequence number of the second device is a start antenna sequence number of the second device based on the first antenna quantity, and the data stream sequence number of the second device is a start data stream sequence number of the second device based on the first data stream quantity.

5. The method according to claim 3 or 4, wherein
an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device; and
the first target device is the first device or the second device, and the second target device is the first device or the second device.

6. The method according to any one of claims 3 to 5, wherein the information frame comprises a user information field, the second device is in a one-to-one correspondence with the user information field, and the antenna sequence number and/or the data stream sequence number of the second device are/is comprised in the user information field corresponding to the second device.

7. The method according to any one of claims 3 to 6, wherein the information frame comprises a common information field, and the first antenna quantity and/or the first data stream quantity are/is comprised in the common information field.

8. The method according to claim 1 or 2, wherein the generating, by a first device, an information frame based on an antenna quantity and/or a data stream quantity of the first device and an antenna quantity and/or a data stream quantity of a second device comprises:
determining, by the first device, the CSD of each antenna of the second device from CSDs of antennas corresponding to a first antenna quantity, wherein the first antenna quantity is a sum of the antenna quantity of the first device and the antenna quantity of the second device; and/or
determining, by the first device, the CSD of each data stream of the second device from CSDs of data streams corresponding to a first data stream quantity, wherein the first data stream quantity is a sum of the data stream quantity of the first device and the data stream quantity of the second device; and
generating, by the first device, the information frame based on the CSD of each antenna and/or the CSD of each data stream of the second device, wherein
the information frame comprises the CSD of each antenna and/or the CSD of each data stream of the second device.

9. The method according to claim 8, wherein the information frame comprises a user information field, the second device is in a one-to-one correspondence with the user information field, and the CSD of each antenna and/or the CSD of each data stream of the second device are/is comprised in the user information field corresponding to the second device.

10. A method for determining a cyclic shift delay CSD value, comprising:
receiving, by a second device, an information frame sent by a first device, wherein the information frame is used to indicate a CSD of each antenna and/or a CSD of each data stream of the second device; and
determining, by the second device, the CSD of each antenna and/or the CSD of each data stream of the second device based on the information frame.

11. The method according to claim 10, wherein CSDs of antennas of the first device are different, CSDs of antennas of the second device are different, and a CSD of any antenna of the first device is different from a CSD of any antenna of the second device; and
CSDs of data streams of the first device are different, CSDs of data streams of the second device are different, and a CSD of any data stream of the first device is different from a CSD of any data stream of the second device.

12. The method according to claim 10 or 11, wherein the information frame comprises a first antenna quantity and/or a first data stream quantity, and an antenna sequence number and/or a data stream sequence number of the second device, the first antenna quantity is a sum of an antenna quantity of the first device and an antenna quantity of the second device, the first data stream quantity is a sum of a data stream quantity of the first device and a data stream quantity of the second device, the antenna sequence number of the second device is an antenna sequence number of the second device based on the first antenna quantity, and the data stream sequence number of the second device is a data stream sequence number of the second device based on the first data stream quantity.

13. The method according to claim 12, wherein the antenna sequence number of the second device is a start antenna sequence number of the second device based on the first antenna quantity, and the data stream sequence number of the second device is a start data stream sequence number of the second device based on the first data stream quantity.

14. The method according to claim 12 or 13, wherein
an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device; and
the first target device is the first device or the second device, and the second target device is the first device or the second device.

15. The method according to any one of claims 12 to 14, wherein the information frame comprises a user information field, the second device is in a one-to-one correspondence with the user information field, and the antenna sequence number and/or the data stream sequence number of the second device are/is comprised in the user information field corresponding to the second device.

16. The method according to any one of claims 12 to 15, wherein the information frame comprises a common information field, and the first antenna quantity and/or the first data stream quantity are/is comprised in the common information field.

17. The method according to claim 10 or 11, wherein the information frame comprises the CSD of each antenna and/or the CSD of each data stream of the second device, the information frame comprises a user information field, the second device is in a one-to-one correspondence with the user information field, and the CSD of each antenna and/or the CSD of each data stream of the second device are/is comprised in the user information field corresponding to the second device.

18. A communication apparatus, wherein the apparatus comprises:
a processing unit, configured to generate, by using a first device, an information frame based on an antenna quantity and/or a data stream quantity of the first device and an antenna quantity and/or a data stream quantity of a second device, wherein the information frame is used to indicate a CSD of each antenna and/or a CSD of each data stream of the second device; and
a communication unit, configured to send, by using the first device, the information frame to the second device.

19. The apparatus according to claim 18, wherein
the processing unit is further configured to determine, by using the first device, a CSD of each antenna and/or a CSD of each data stream of the first device based on the antenna quantity and/or the data stream quantity of the first device and the antenna quantity and/or the data stream quantity of the second device, wherein
CSDs of antennas of the first device are different, CSDs of antennas of the second device are different, and a CSD of any antenna of the first device is different from a CSD of any antenna of the second device; and
CSDs of data streams of the first device are different, CSDs of data streams of the second device are different, and a CSD of any data stream of the first device is different from a CSD of any data stream of the second device.

20. The apparatus according to claim 18 or 19, wherein the information frame comprises a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

21. The apparatus according to claim 20, wherein the antenna sequence number of the second device is a start antenna sequence number of the second device based on the first antenna quantity, and the data stream sequence number of the second device is a start data stream sequence number of the second device based on the first data stream quantity.

22. The apparatus according to claim 20 or 21, wherein an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device; and
the first target device is the first device or the second device, and the second target device is the first device or the second device.

23. The apparatus according to any one of claims 20 to 22, wherein the information frame comprises a user information field, the second device is in a one-to-one correspondence with the user information field, and the antenna sequence number and/or the data stream sequence number of the second device are/is comprised in the user information field corresponding to the second device.

24. The apparatus according to any one of claims 20 to 23, wherein the information frame comprises a common information field, and the first antenna quantity and/or the first data stream quantity are/is comprised in the common information field.

25. The apparatus according to claim 18 or 19, wherein
the processing unit is further configured to determine, by using the first device, the CSD of each antenna of the second device from CSDs of antennas corresponding to a first antenna quantity, wherein the first antenna quantity is a sum of the antenna quantity of the first device and the antenna quantity of the second device; and/or
determine, by using the first device, the CSD of each data stream of the second device from CSDs of data streams corresponding to a first data stream quantity, wherein the first data stream quantity is a sum of the data stream quantity of the first device and the data stream quantity of the second device; and
generate, by using the first device, the information frame based on the CSD of each antenna and/or the CSD of each data stream of the second device, wherein
the information frame comprises the CSD of each antenna and/or the CSD of each data stream of the second device.

26. The apparatus according to claim 25, wherein the information frame comprises a user information field, the second device is in a one-to-one correspondence with the user information field, and the CSD of each antenna and/or the CSD of each data stream of the second device are/is comprised in the user information field corresponding to the second device.

27. A communication apparatus, wherein the apparatus comprises:
a communication unit, configured to receive, by using a second device, an information frame sent by a first device, wherein the information frame is used to indicate a CSD of each antenna and/or a CSD of each data stream of the second device; and
a processing unit, configured to determine, by using the second device, the CSD of each antenna and/or the CSD of each data stream of the second device based on the information frame.

28. The apparatus according to claim 27, wherein CSDs of antennas of the first device are different, CSDs of antennas of the second device are different, and a CSD of any antenna of the first device is different from a CSD of any antenna of the second device; and
CSDs of data streams of the first device are different, CSDs of data streams of the second device are different, and a CSD of any data stream of the first device is different from a CSD of any data stream of the second device.

29. The apparatus according to claim 27 or 28, wherein the information frame comprises a first antenna quantity and/or a first data stream quantity, and an antenna sequence number and/or a data stream sequence number of the second device, the first antenna quantity is a sum of the antenna quantity of the first device and the antenna quantity of the second device, the first data stream quantity is a sum of the data stream quantity of the first device and the data stream quantity of the second device, the antenna sequence number of the second device is an antenna sequence number of the second device based on the first antenna quantity, and the data stream sequence number of the second device is a data stream sequence number of the second device based on the first data stream quantity.

30. The apparatus according to claim 29, wherein the antenna sequence number of the second device is a start antenna sequence number of the second device based on the first antenna quantity, and the data stream sequence number of the second device is a start data stream sequence number of the second device based on the first data stream quantity.

31. The apparatus according to claim 29 or 30, wherein an antenna sequence number of a first target device is less than an antenna sequence number of a second target device, and an antenna quantity of the first target device is less than an antenna quantity of the second target device; and/or a data stream sequence number of the first target device is less than a data stream sequence number of the second target device, and a data stream quantity of the first target device is less than a data stream quantity of the second target device; and
the first target device is the first device or the second device, and the second target device is the first device or the second device.

32. The apparatus according to any one of claims 29 to 31, wherein the information frame comprises a user information field, the second device is in a one-to-one correspondence with the user information field, and the antenna sequence number and/or the data stream sequence number of the second device are/is comprised in the user information field corresponding to the second device.

33. The apparatus according to any one of claims 29 to 32, wherein the information frame comprises a common information field, and the first antenna quantity and/or the first data stream quantity are/is comprised in the common information field.

34. The apparatus according to claim 27 or 28, wherein the information frame comprises the CSD of each antenna and/or the CSD of each data stream of the second device, the information frame comprises a user information field, the second device is in a one-to-one correspondence with the user information field, and the CSD of each antenna and/or the CSD of each data stream of the second device are/is comprised in the user information field corresponding to the second device.

35. A communication apparatus, wherein the communication apparatus comprises a processor, and when the processor executes a computer program in a memory, the method according to any one of claims 1 to 9 is performed, or when the processor executes the computer program in a memory, the method according to any one of claims 10 to 17 is performed.

36. A communication apparatus, comprising a processor and a memory, wherein
the memory is configured to store computer-executable instructions; and
the processor is configured to execute the computer-executable instructions stored in the memory, so that the communication apparatus performs the method according to any one of claims 1 to 9, or the communication apparatus performs the method according to any one of claims 10 to 17.

37. A communication apparatus, comprising a processor, a memory, and a transceiver, wherein
the transceiver is configured to receive a signal or send a signal;
the memory is configured to store program code; and
the processor is configured to invoke the program code from the memory to perform the method according to any one of claims 1 to 9, or is configured to invoke the program code from the memory to perform the method according to any one of claims 10 to 17.

38. A communication apparatus, comprising a processor and an interface circuit, wherein
the interface circuit is configured to receive code instructions and transmit the code instructions to the processor, and the processor runs the code instructions to perform the method according to any one of claims 1 to 9, or the processor runs the code instructions to perform the method according to any one of claims 10 to 17.

39. A computer-readable storage medium, wherein the computer-readable storage medium is configured to store instructions, and when the instructions are executed, the method according to any one of claims 1 to 9 is implemented, or when the instructions are executed, the method according to any one of claims 10 to 17 is implemented.
